(19) Europäisches Patentamt
European Patent Office
Office européen des brevets

(11) Veröffentlichungsnummer: **0 549 968 A1**

(12) # EUROPÄISCHE PATENTANMELDUNG

(21) Anmeldenummer: **92121460.7**

(22) Anmeldetag: **17.12.92**

(51) Int. Cl.[5]: **C08G 8/28**, C09B 41/00, C09B 67/00, D06P 1/52, D06P 1/651, D06P 1/613

(30) Priorität: **20.12.91 DE 4142133**

(43) Veröffentlichungstag der Anmeldung: **07.07.93 Patentblatt 93/27**

(84) Benannte Vertragsstaaten: **CH DE FR GB IT LI**

(71) Anmelder: **HOECHST AKTIENGESELLSCHAFT**
**Postfach 80 03 20**
**W-6230 Frankfurt am Main 80(DE)**

(72) Erfinder: **Uhrig, Heinz**
**Feldbergstrasse 59**
**W-6374 Steinbach/Taunus(DE)**

(54) **Grenzflächenakfive Verbindungen auf Basis modifizierter Novolakoxalklylate, ihre Herstellung und ihre Verwendung.**

(57) Die Erfindung betrifft Novolak-oxalkylate, deren freie endständige Hydroxygruppen mit $C_2$-$C_{22}$-Fettsäuren, Di- oder Tricarbonsäuren auf Basis von di- oder trimerisierten $C_{11}$-$C_{24}$-Fettsäuren, aromatischen Carbonsäuren, Harzsäuren oder gesättigten oder ungesättigten Dicarbonsäuren verestert sind und wobei freie Carboxylgruppen mit einer Base, vorzugsweise einem Amin, neutralisiert sein können. Derartige Novolak-Verbindungen werden erfindungsgemäß als oberflächenaktive Mittel eingesetzt, insbesondere als Kupplungshilfsmittel für Azofarbmittel, als Dispergiermittel von Pigmenten und Pflanzenschutzmitteln sowie auf dem Gebiet der Lederfärbung und -gerbung.

EP 0 549 968 A1

Die Erfindung gehört in das technische Gebiet grenzflächenaktiver Mittel, die insbesondere als Hilfsmittel bei der Herstellung von Feststoffdispersionen und Emulsionen sowie als Kupplungshilfsmittel bei der Herstellung von Azofarbmitteln oder als Färbereihilfsmittel eingesetzt werden können.

Bei der Herstellung von Dispersionen und Präparationen von Farbmitteln, beispielsweise Dispersionsfarbstoffen, vorzugsweise jedoch anorganischen und organischen Pigmenten, für Anwendungen in wäßrigen und organischen Medien werden eine Vielzahl nichtionischer, anionischer und auch kationischer Tenside benutzt. Die Art der Tenside hat einen wesentlichen Einfluß auf die Feinverteilung und damit auf die Farbstärke der Farbmittel in den jeweiligen Anwendungsmedien. Außerdem werden Viskosität, Glanz und Lagerstabilität maßgeblich von der Art der Tenside beeinflußt. Auch bei der Herstellung von Azofarbstoffen aus schwer löslichen Kupplungskomponenten werden üblicherweise Tenside eingesetzt, die eine gute Verteilung der Kupplungskomponente in dem Reaktionsmedium und eine vollständige Reaktion bei der Azokupplung ermöglichen. Ebenso werden beispielsweise zum Färben von Leder neben bekannten Neutralsalzen synthetischer Hilfsstoffe anionische, kationische und amphotere Hilfsmittel, wie unter anderem verschiedene Amine, Aminharze, modifizierte Eiweißhydrolysate und Kondensationsprodukte von Polysäuren mit Aminen, verwendet (Ullmann, Encyklopädie der technischen Chemie, 4. Aufl., 1978, Band 16, Seite 150).

Aus der DE-A 2 732 732 sind wasserlösliche Oxalkylierungsprodukte auf Basis von Styrolphenol als Dispergiermittel für wasserlösliche Farbstoffe zum Pigmentieren von Kunststoffdispersionen bekannt.

In der EP-A1-0 030 701 wird die Herstellung von 1-Aralkyl-2-naphthol als Ausgangsprodukt für die Herstellung von Emulgier-, Dispergier- und Färbereihilfsmitteln beschrieben.

Aus den EP-A-0 378 048, 0 403 718 und 0 420 807 sind Textilhilfsmittel, Emulgier-, Färbereihilfs- und Foulardierhilfsmittel bekannt, wie man sie als Anlagerungsprodukte aus Styrol mit Polyalkylenglykolethern bzw. Arylalkanolen erhält.

In der DE-A-3 927 471 werden zur Badpigmentierung von Leder feinteilige Pigmentdispersionen beschrieben, die unter Zuhilfenahme von verschiedenen Glykolen und oxalkylierten Fettsäuren oder Fettalkoholen zubereitet werden. Ebenso werden in der DE-A-3 931 978 Lederbehandlungsmittel beschrieben, die man aus Fettsäurealkanolamiden mit Maleinsäureanhydrid und Sulfit erhält.

In den beiden DE-A-3 601 721 und 3 934 713 werden Färbe- bzw. Durchfärbeverfahren von Ledermaterialien mit wasserlöslichen Schwefelfarbstoffen sowie anionischen Farbstoffen beschrieben, wobei hochoxethylierte und gegebenenfalls quaternisierte Fettamine oder Fettaminalkylamine sowie Polykondensationsprodukte auf Basis von Aminen verwendet werden.

Weiterhin sind in der EP-A1-0 344 555 Verfahren zum Färben von Leder mit Pigmenten offenbart, wobei vorzugsweise oxalkylierte Alkylamine mit bis zu 20 Kohlenstoffatomen eingesetzt werden.

Die ständig zunehmenden Anforderungen an Dispergier-, Emulgier- und Präparationsmittel, insbesondere für die Herstellung von Pigmentdispersionen für den Druckfarbensektor und für die chromfreie Gerbung und Färbung von Leder, machte die Entwicklung neue grenzflächenaktiver Verbindungen notwendig.

Die Aufgabe der vorliegenden Erfindung besteht nun darin, grenzflächenaktive Verbindungen auf Basis modifizierter Novolakoxalkylate zur Verfügung zu stellen, die im Falle ihrer Verwendung auf den eingangs genannten Anwendungsgebieten gegenüber den Verbindungen vom Stand der Technik deutlich verbesserte grenzflächenaktive Eigenschaften aufweisen.

Gegenstand der Erfindung sind Verbindungen der allgemeinen Formel (I)

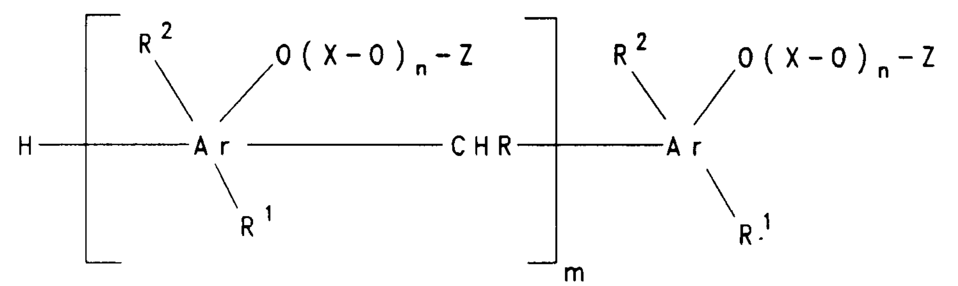

(I)

in welcher

- Ar einen Benzol-, Naphthalin- oder Biphenyl-Rest darstellt,
- X für gleiche oder verschiedene Gruppen der Formeln $-CH_2CH_2-$, $-CH(CH_3)CH_2-$ und $-CH_2CH(CH_3)-$ steht,
- $R^1$ ein Rest aus der Gruppe $-CH(CH_3)-C_6H_5$, $-CH(CH_3)-C_6H_4CH_3$, $-C(CH_3)_2-C_6H_5$ und $-CH_2-CH(CH_3)-$

$C_6H_5$ ist, oder
wenn Ar für einen Benzolrest steht,
ein Alkylrest mit 1 bis 14, vorzugsweise 8 bis 12, C-Atomen ist oder die vorstehend genannten Bedeutungen hat,

$R^2$ eine der für $R^1$ genannten Bedeutungen hat, vorzugsweise jedoch Wasserstoff ist,
R ein Alkylrest mit 1 bis 9 C-Atomen oder vorzugsweise Wasserstoff ist,
Z für gleiche oder verschiedene Reste $Z^1$ bis $Z^6$ steht, worin
$Z^1$ Wasserstoff,
$Z^2$ einen Acylrest der Formel $R^3$-CO-, in der $R^3$ ein geradkettiger, gesättigter oder ungesättigter $C_1$-$C_{21}$-Alkylrest, der noch durch ein oder zwei Hydroxygruppen substituiert sein kann,
$Z^3$ einen Acylrest einer Di- oder Tricarbonsäure auf Basis einer di- oder trimerisierten $C_{11}$-$C_{24}$-Fettsäure,
$Z^4$ einen Acylrest der Formel $R^4$-CO-, in der $R^4$ einen Phenyl- oder Naphthylrest bedeutet,
$Z^5$ einen Acylrest einer unmodifizierten oder modifizierten natürlichen Harzsäure,
$Z^6$ gleiche oder verschiedene Reste der Formeln
$-CO-CH=CH-COOM$, $-CO-CH_2-CH_2-COOM$, $-CO-CH(SO_3M)-CH_2-COOM$, $-CO-CH_2-CH(SO_3M)-COOM$ und $-OC-C_6H_4-COOM$ bedeuten,
worin M für
Wasserstoff, ein Alkalimetall, ein Äquivalent eines Erdalkalimetalls oder eine Ammoniumgruppe steht, die durch ein bis vier $C_1$-$C_5$-Alkylreste oder $C_2$-$C_5$-Alkylolreste substituiert sein kann, oder eine aus Ammoniak oder aus $C_1$-$C_5$-Alkylaminen oder $C_2$-$C_5$-Alkylolaminen durch Anlagerung von 1 bis 150, vorzugsweise 5 bis 30, Ethylenoxid- und/oder Propylenoxideinheiten erhaltene Ammoniumgruppe oder eine Gruppe der Formel (II)

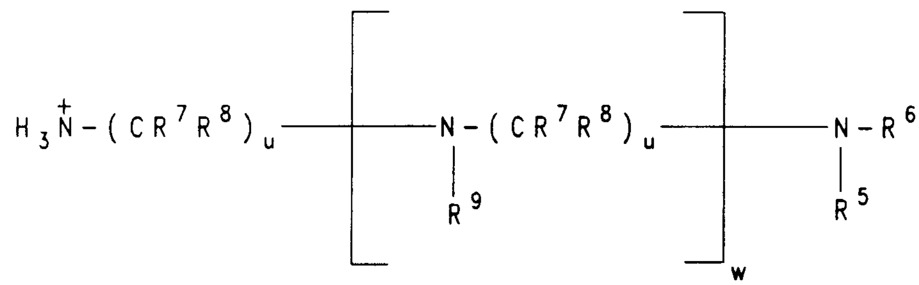
(II)

ist, worin $R^9$, $R^5$ und $R^6$ unabhängig voneinander für ein Wasserstoffatom oder ein Hydroxyalkyl mit 1 bis 6 C-Atomen, vorzugsweise 2 bis 3 C-Atomen, und $R^7$ und $R^8$ unabhängig voneinander für Wasserstoff oder Methyl stehen, u gleich oder verschieden ist und eine ganze Zahl von 2 bis 14, bevorzugt von 2 bis 3, bedeutet und w für eine ganze Zahl von Null bis 25, bevorzugt von Null bis 5, steht, oder worin M für eine Gruppe der Formel (III) steht,

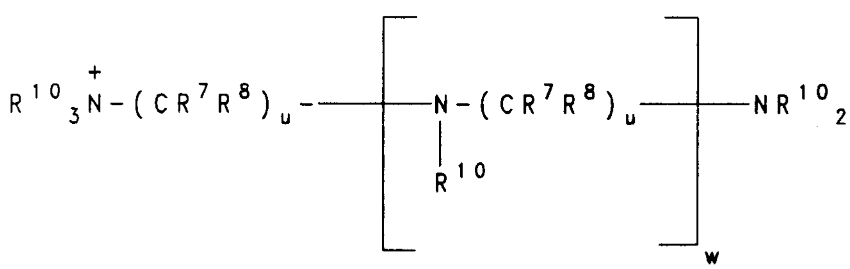
(III)

worin $R^{10}$ die Gruppe $H(O-X)_y$ bedeutet,
worin X die vorstehend genannten Bedeutungen hat und y eine ganze Zahl von 1 bis 100, vorzugsweise 1 bis 30, ist,
n eine Zahl von 1 bis 150, vorzugsweise 5 bis 30, und
m eine ganze Zahl von 1 bis 11, vorzugsweise 1 bis 6, bedeuten.

Bevorzugt sind Verbindungen der Formel (I), in denen

X $-CH_2-CH_2-$
$R^1$ den Rest $-CH(CH_3)-C_6H_5$,
$R^2$ Wasserstoff oder Methyl,
R einen Alkylrest mit 1 bis 9 C-Atomen oder bevorzugt Wasserstoff,
Z gleiche oder verschiedene Reste der Formeln $Z^2$, $Z^5$ und $Z^6$ mit den vorstehend genannten Bedeutungen,
n eine Zahl von 5 bis 30 und
m eine ganze Zahl von 1 bis 6 bedeuten.

Von besonderem Interesse sind Verbindungen der Formel (I), in denen

Ar einen Benzolrest,
X $-CH_2-CH_2-$,
$R^1$ den Rest $-CH(CH_3)-C_6H_5$,
$R^2$ Wasserstoff oder Methyl,
R Wasserstoff und
Z gleiche oder verschiedene Reste der Formel $Z^6$ mit der vorstehend genannten Bedeutung, wobei M für ein Alkalimetall oder eine Ammonium-Gruppe, die durch eine $C_1$-$C_4$-Alkylgruppe substituiert sein kann, oder für eine Gruppe der vorstehend erwähnten Formel (II) steht,
n eine Zahl von 5 bis 30 und
m eine ganze Zahl von 1 bis 6 bedeuten.

Bevorzugt sind weiterhin Verbindungen der Formel (I), worin 10 bis 100 %, vorzugsweise 20 bis 80 %, insbesondere 30 bis 70 %, der Reste Z jeweils unabhängig voneinander die Bedeutung von $Z^2$, $Z^3$, $Z^4$, $Z^6$ oder einer Kombination davon haben und 0 bis 90 %, vorzugsweise 80 bis 20 % insbesondere 30 bis 70 %, der Reste Z die Bedeutung von $Z^1$, $Z^5$ oder einer Kombination davon haben.

Besonders bevorzugt sind Verbindungen der Formel (I), worin 10 bis 100 %, vorzugsweise 20 bis 70 %, insbesondere 30 bis 50 %, der Reste Z die Bedeutung von $Z^6$ haben, wobei der Rest $-OC-C_6H_4-COOM$ entweder

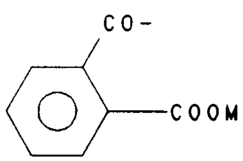 oder 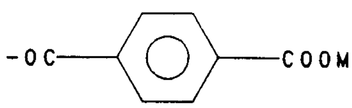

ist, und 0 bis 90 %, vorzugsweise 30 bis 80 %, insbesondere 50 bis 70 %, der Reste Z die Bedeutung von $Z^1$, $Z^2$, $Z^3$, $R^4$, $Z^5$ oder einer Kombination davon haben.

Wenn Ar in Formel (I) ein Benzol- oder Naphthalinrest, $R^1$ ein Rest aus der Gruppe $-CH(CH_3)-C_6H_5$, $-CH(CH_3)-C_6H_4CH_3$, $-C(CH_3)_2-C_6H_5$ und $-CH_2-CH(CH_3)-C_6H_5$ und $R^2$ Wasserstoff oder Methyl ist, so ist es besonders vorteilhaft, wenn 10 bis 50 %,
vorzugsweise 30 bis 50 %, der Reste Z die Bedeutung von $Z^5$ und 50 bis 90 %, vorzugsweise 50 bis 70 %, der Reste Z die Bedeutung von $Z^6$ haben.

Wenn Ar in Formel (I) ein Benzolrest, $R^1$ ein Alkylrest mit 1 bis 14, vorzugsweise 8 bis 12, C-Atomen und $R^2$ Wasserstoff oder Methyl ist, so ist es besonders vorteilhaft, wenn 10 bis 100 %, vorzugsweise 50 bis 100 %, der Reste Z aus Acylresten der Formeln

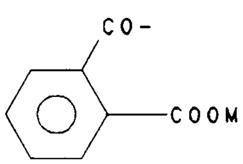 oder 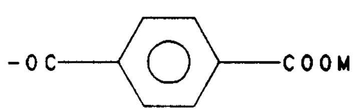

bestehen
und 0 bis 90 %, vorzugsweise 0 bis 50 %, der Reste Z aus Acylresten der Formeln $-OC-CH=CH-COOM$, $-OC-CH_2-CH_2-COOM$, $-OC-CH_2-CH(SO_3M)-COOM$, $-OC-CH(SO_3M)-CH_2-COOM$ oder einer Kombination davon bestehen.

In einer besonders bevorzugten Ausführungsform hat der Rest $Z^6$ die vorstehend genannten Bedeutungen, worin M für eine Gruppe der Formel II steht, worin $R^9$, $R^5$ und $R^6$ unabhängig voneinander für ein Wasserstoffatom oder ein Hydroxyalkyl mit 2 bis 3 C-Atomen, $R^7$ und $R^8$ unabhängig voneinander für Wasserstoff oder Methyl, u gleich oder verschieden ist und für eine ganze Zahl von 2 bis 3 und w für eine ganze Zahl von Null bis 5 stehen.

Gegenstand der Erfindung ist auch ein Verfahren zur Herstellung der erfindungsgemäßen Verbindungen. Sie werden erhalten, in dem man

a) Phenol, $C_1$-$C_{14}$-Alkylphenol oder o- bzw. p-Phenylphenol in Gegenwart eines sauren Katalysators mit einem $C_1$-$C_{10}$-Alkanal zu Novolakharzen kondensiert und anschließend gegebenenfalls mit Vinylbenzol, Isopropenylbenzol oder Vinyltoluol alkyliert, oder

b) $\alpha$- oder $\beta$-Naphthol in Gegenwart eines sauren Katalysators mit Vinylbenzol, Isopropenylbenzol oder Vinyltoluol alkyliert und anschließend gleichermaßen wie die in a) genannten Phenole mit einem $C_1$-$C_{10}$-Alkanal zu Novolakharzen umsetzt und

c) die nach a) oder b) erhaltenen Novolakverbindungen mit 1 bis 150 Mol, bezogen auf jede freie Hydroxygruppe, Ethylenoxid oder Propylenoxid oder mit beiden Epoxiden hintereinander oder einem Gemisch beider Epoxide oxalkyliert und

d) gegebenenfalls die endständigen Hydroxygruppen mit den den Resten $Z^2$, $Z^3$, $Z^4$, $Z^5$ und $Z^6$ zugrundeliegenden Carbonsäuren oder reaktiven Derivaten dieser Säuren, vorzugsweise Anhydriden, durchgehend verestert oder teilverestert oder mit mehreren der vorstehend genannten Carbonsäuren oder deren Derivaten mischverestert, vorhandene Maleinsäurehalbestergruppen gegebenenfalls mit einem Sulfit umsetzt und

e) gegebenenfalls die freien Carboxylgruppen mit einem Alkalihydroxid, Erdalkalihydroxid oder einem dem Rest M zugrundeliegenden Amin neutralisiert.

a) Als Ausgangsverbindungen zur Bildung von Novolakharzen eignen sich Alkylphenole, wie beispielsweise Kresole, Xylenole, Octyl-, Nonyl-, Dodecyl-, Tetradecyl-, Dibutyl-, Dioctyl-, Dinonyl-, Ditetradecylphenol oder deren Mischungen sowie bevorzugt styrolisierte Naphthole, o- bzw. p-Phenylphenol oder Phenol.

Als "styrolisierte Naphthole" werden die mit Vinyltoluol, Isopropenylbenzol oder Vinylbenzol alkylierten $\alpha$- bzw. $\beta$-Naphthole bezeichnet. Die Styrolisierung von $\alpha$-und $\beta$-Naphthol erfolgt, wie vorstehend unter Variante b) beschrieben.

Die der Formel (I) zugrundeliegenden Novolake werden erhalten, indem man Phenol, Alkylphenol, styrolisiertes Naphthol oder o- bzw. p-Phenylphenol oder deren Gemische mit Alkanalen im Molverhältnis 3:2 bis 17:16 in Gegenwart von sauren Katalysatoren kondensiert.

Als Beispiele für die bei der Kondensation einsetzbaren Alkanale sind zu erwähnen: Formaldehyd, Acetaldehyd, Propionaldehyd, Butyraldehyd und Nonylaldehyd, vorzugsweise jedoch Formaldehyd oder Aldehyde abgebende Verbindungen wie Paraformaldehyd, Trioxan, Tetraoxymethylen oder Paraldehyd.

Als saure Katalysatoren können Mineralsäuren wie Schwefelsäure, Phosphorsäure sowie Sulfonsäuren, wie Dodecylbenzolsulfonsäure, oder bevorzugt Salzsäure - wegen ihrer leichten Entfernbarkeit bei der Wasserentfernung - mit einer Konzentration von 0,1 bis 5 Gewichtsprozent verwendet werden.

Die Kondensation wird bei Temperaturen von 20 bis 150 °C, bevorzugt 80 bis 130 °C, zweckmäßigerweise unter Inertgasatmosphäre durchgeführt. Das nach der Kondensation vorhandene Wasser wird zweckmäßigerweise abdestilliert, zuletzt unter vermindertem Druck (kleiner als 66 mbar), bis der Wassergehalt im Harz weniger als 0,3 Gew.-% beträgt.

Anschließend erfolgt die Styrolisierung der Novolakharze auf der Basis von Phenol- bzw. o- oder p-Phenylphenol mit Isopropenylbenzol, Vinylbenzol oder Vinyltoluol (o-, m- oder p-Methylstyrol), vorzugsweise jedoch mit Vinylbenzol, gegebenenfalls nach weiterer Zugabe eines sauren Katalysators, wie beispielsweise einer Mineralsäure wie Schwefelsäure, Borsäure, Phosphorsäure oder vorzugsweise p-Toluolsulfonsäure, Oxalsäure, oder Glyoxylsäure oder Bortrifluorid in einer Konzentration von 0,1 bis 3 Gew.-%, vorzugsweise 0,5 bis 1,0 Gew.-%, bei 100 °C bis 200 °C, vorzugsweise bei 120 °C bis 150 °C, mit anschließender Destillation unter Vakuum ($< 30$ mbar), bis der Styrolgehalt im Harz weniger als 0,1 Gew.-% beträgt.

Die Styrolisierung kann entfallen, wenn als Ausgangsmaterial bereits styrolisierte Naphthole eingesetzt werden und daneben keine Alkylphenole, Phenole oder Phenylphenol vorhanden sind, die einer Styrolisierung unterworfen werden sollen.

Die erhaltenen styrolisierten Novolake sind mehr oder weniger spröde, klare hellrote bis dunkelbraun gefärbte Harze. Sie bestehen aus Gemischen von mehrkernigen, mit (Alkyl)methylenbrücken verknüpften Phenol-, Alkylphenol-, p-Phenylphenol- oder Naphthol-Kernen. Die Alkylmethylenbrücken sind ausschließlich mit aromatischen C-Atomen der genannten aromatischen Kerne verknüpft.

Die Zusammensetzung der Novolake ist vor allem von dem Verhältnis Aromat zu Formaldehyd abhängig. Sie besitzen ein mittleres Molekulargewicht von 600 bis 5000, vorzugsweise 600 bis 2500.

An diese Novolak-Harze wird anschließend Alkylenoxid in Mengen von 1 bis 150 Mol, vorzugsweise 5 bis 30 Mol, bezogen auf jede Hydroxylgruppe, zweckmäßigerweise in Gegenwart alkalischer Katalysatoren, unter Bildung von Novolakharz-Oxalkylaten angelagert.

c) Die Oxalkylierung der Novolakharze erfolgt nach üblichen Methoden, vorzugsweise mit Alkalihydroxiden oder -alkoxiden als Katalysatoren bei 100 bis 200 °C, bevorzugt bei 140 bis 180 °C. Die Menge Ethylenoxid und/oder Propylenoxid wird so bemessen, daß eine stabile Emulgierbarkeit bzw. eine völlige Löslichkeit der Anlagerungsprodukte in Wasser erreicht wird. An jede Hydroxygruppe der Novolakharze werden dabei 1 bis 150, vorzugsweise 5 bis 30, Mol Ethylenoxid und/oder Propylenoxid angelagert. Die Menge des angelagerten Alkylenoxids bemißt sich auch nach dem beabsichtigten Einsatzzweck und damit dem angestrebten Grad der Hydrophilie.

Als Alkalihydroxid eignen sich Kaliumhydroxid oder bevorzugt Natriumhydroxid, als Alkalialkoxid Natriummethylat oder -ethylat. Die Konzentration ist zweckmäßigerweise 0,05 bis 1,0 Gew.-%, bezogen auf Novolakharz, bei Beginn der Oxalkylierung. Die Oxalkylierung kann drucklos oder in Druckgefäßen mit Propylenoxid oder bevorzugt Ethylenoxid oder Mischungen von beiden durchgeführt werden, wobei das Alkylenoxid gasförmig oder flüssig zugeführt werden kann. Der Arbeitsdruck beträgt 1 bis 10 bar, vorzugsweise 2 bis 4 bar.

Die erhaltenen oxalkylierten Novolakharze sind bereits wertvolle oberflächenaktive Mittel und können im Sinne der Erfindung eingesetzt werden.

d) Eine Verbesserung der anwendungstechnischen Eigenschaften ermöglicht die Veresterung eines Teils oder aller endständigen Hydroxygruppen der Oxalkylketten unter Einführung von Resten Z anstelle des Wasserstoffs der endständigen Hydroxygruppen, wobei Z eine der obengenannten von Wasserstoff verschiedenen Bedeutungen hat.

Zur Einführung von nichtionogenen Resten Z werden erfindungsgemäß Monocarbonsäuren oder deren reaktive Derivate, beispielsweise deren Anhydride oder Ester, eingesetzt.

Geeignete Monocarbonsäuren sind beispielsweise: Harzsäuren wie Abietinsäure, Dehydroabietinsäure, Tetrahydroabietinsäure, Lävopimarsäure, Dextropimarsäure und Isodextropimarsäure, wie sie in handelsüblichen Kolophoniumarten vorliegen, sowie modifizierte Harzsäuren, wie disproportionierte, hydrierte und dimerisierte Naturharzsäuren; weiterhin eignen sich für die Veresterung gesättigte oder ungesättigte Carbonsäuren oder Hydroxycarbonsäuren, insbesondere $C_2$-$C_{22}$-Fettsäuren oder Hydroxyfettsäuren, wie beispielsweise Essigsäure, Propionsäure, Buttersäure, Valeriansäure, Capronsäure, Heptansäure, Octansäure, Pelargonsäure, Caprinsäure, Laurinsäure, Myristinsäure, Palmitinsäure, Stearinsäure, Arachinsäure, Behensäure, Ölsäure, Linolsäure, Talgfettsäure und Rizinolsäure, vorzugsweise die genannten Fettsäuren mit 12 bis 18 C-Atomen, insbesondere wie sie als handelsübliche Fettsäuren oder Fettsäuregemische vorliegen, sowie handelsübliche dimerisierte oder trimersierte $C_{11}$-$C_{24}$-Fettsäuren oder deren Gemische sowie aromatische Carbonsäuren, wie beispielsweise Benzoesäure und $\alpha$- oder $\beta$-Naphthoesäure.

Die natürlichen bzw. modifizierten Harzsäuren, Fettsäuren oder aromatischen Carbonsäuren werden nach an sich üblichen Veresterungsmethoden mit den oxalkylierten Novolaken verestert. Die Reaktionstemperatur liegt in der Regel zwischen 20 °C und 240 °C, je nach Veresterungsmethode. Bevorzugt wird zur Erhöhung der Ausbeute die Veresterung in einem inerten organischen Lösemittel durchgeführt, das als Schleppmittel zum Entfernen des Reaktionswassers geeignet ist. Vorzugsweise wird die Veresterung in Xylol als organischem Lösemittel und in Gegenwart von sauren Katalysatoren bei einer Temperatur von 130 bis 220 °C durchgeführt. Als saure Katalysatoren können Säuren und Lewissäuren, wie Benzolsulfonsäure, p-Toluolsulfonsäure, Borsäure, Zinnpulver, Zinkchlorid und Schwefelsäure, verwendet werden.

Die Veresterung der oxalkylierten Novolake mit den genannten Harzsäuren, Fettsäuren oder aromatischen Carbonsäuren kann alternativ auch durch Umesterung unter Einsatz der entsprechenden Alkylester, vorzugsweise Methylester, der genannten Säuren in Gegenwart von 0,1 bis 1,0 Mol-Äquivalenten Alkoxylat, vorzugsweise Natriummethylat, bei 150 bis 200 °C, vorzugsweise 160 bis 190 °C, unter Abdestillieren des frei werdenden Alkanols, vorzugsweise Methanols, erfolgen. Zur Herstellung von Mischestern kann ein Gemisch von Harzsäuren, Fettsäuren und/oder aromatischen Carbonsäuren oder deren reaktiven Derivaten eingesetzt werden, oder die Veresterung erfolgt durch mindestens zwei hintereinander ablaufende Teilveresterungsschritte.

Die erfindungsgemäßen nicht-ionogenen Harzsäure-, Fettsäure- oder aromatischen Carbonsäureester der Novolakoxalkylate sind als solche wertvolle oberflächenaktive Mittel und können im Sinne der Erfindung eingesetzt werden.

Zur Einführung von anionischen Estergruppen werden erfindungsgemäß Dicarbonsäuren oder deren Anhydride eingesetzt, beispielsweise Maleinsäure, Maleinsäureanhydrid, Fumarsäure, Phthalsäure, Phthalsäureanhydrid, Isophthalsäure, Terephthalsäure, Oxalsäure, Malonsäure, Bernsteinsäure, Bernsteinsäureanhydrid, Glutarsäure, Glutarsäureanhydrid, Adipinsäure, Pimelinsäure, Korksäure, Azelainsäure und Sebacinsäure.

Im Falle der genannten Anhydride geschieht die Veresterung durch Mischen und Verrühren mit dem oxalkylierten Novolak bei 10 bis 120 °C, bevorzugt bei 40 bis 80 °C, in Anwesenheit von Alkalihydroxiden. Die Konzentration der Alkalihydroxide beträgt zweckmäßigerweise 0,1 bis 1,0 Gew.-%, bezogen auf die Gesamtmischung. Im Falle von Maleinsäureanhydrid ist es wegen der Sublimationsneigung vorteilhaft, in Druckgefäßen bei einem Überdruck von 0,2 bis 1,0 bar Stickstoff oder Luft zu arbeiten und für kräftiges Durchmischen zu sorgen, da zu Beginn der Reaktion das geschmolzene Maleinsäureanhydrid mit den teilveresterten Oxalkylaten schlecht mischbar ist.

Eine vorteilhafte Ausführungsform besteht in der Bereitstellung von Mischestern aus Harzsäuren, Fettsäuren oder aromatischen Carbonsäuren einerseits, und aus den dem Rest $Z^6$ zugrundeliegenden Dicarbonsäuren andererseits. Die Herstellung dieser Mischester kann wie vorstehend erwähnt durch mindestens zwei hintereinander ablaufende Teilveresterungsschritte erfolgen, wobei zweckmäßigerweise die Veresterung mit der Dicarbonsäure(derivat) der letzte Teilveresterungsschritt ist.

Im Falle von eingeführten Maleinsäurehalbestergruppen ist es außerdem vorteilhaft, diese Halbestergruppen in die entsprechenden Sulfobernsteinsäurehalbestergruppen zu überführen. Dies gelingt beispielsweise nach Zugabe von wäßrigen Lösungen von Sulfiten, Pyrosulfiten oder Hydrogensulfiten zu den Verbindungen, die Maleinsäurehalbestergruppen aufweisen. Auf jede Maleinsäurehalbestergruppe werden dabei 1,0 bis 1,5, bevorzugt 1,0 bis 1,1 Mol, schweflige Säure in Form von Alkali- oder Erdalkalisulfiten oder -hydrogensulfiten oder -pyrosulfiten eingesetzt. Die zugesetzte Wassermenge beträgt in der Regel etwa 50 bis 85 Gew.-%, bezogen auf die gesamte Lösung bzw. Mischung, und ist abhängig von der Löslichkeit der Sulfobernsteinsäurehalbestersalze und der Viskosität der Lösungen. Die Reaktionstemperatur bei der Umsetzung der genannten Sulfite mit den Malensäurehalbesterverbindungen beträgt in der Regel 20 bis 100 °C, bevorzugt 40 bis 80 °C.

e) Die mit einer oder mehreren Carboxygruppen versehenen Oxalkylierungsprodukte bzw. durch Umsetzung der Maleinsäurehalbester mit einem Sulfit eingeführten Sulfogruppe(n) werden in einer bevorzugten Ausführungsform mit Alkalihydroxiden oder Erdalkalihydroxiden oder bevorzugt mit Basen wie Ammoniak, $C_1$-$C_5$-Alkylaminen, $C_2$-$C_5$-Alkylolaminen oder deren Alkylenoxidaddukten, wobei pro Mol Amin oder Alkylolamin bis zu etwa 150 Mol Ethylenoxid oder Propylenoxid oder eine Kombination aus beiden angelagert sind, oder mit $C_2$-$C_6$-Alkylendi- bzw. $C_2$-$C_6$-Alkylenpolyaminen, neutralisiert.

Erfindungsgemäß einsetzbare Alkylamine und Alkylolamine sind beispielsweise: Ethylamin, Propylamin, Isopropylamin, n-Butylamin, Isobutylamin, Monoethanolamin, Monopropanolamin, Monoisopropanolamin, Monobutanolamin, Monoisobutanolamin, Diethanolamin, Dipropanolamin, Dibutanolamin, Triethanolamin, Tripropanolamin oder Tributanolamin sowie Di- und Polyamine wie 1,2-Diaminoethan, 1,3-Diaminopropan, 1,2-Diaminopropan, 1,4-Diaminobutan, 1,5-Diaminopentan, 1,6-Diaminohexan, 1,7-Diaminoheptan, 1,8-Diaminooctan, 1,9-Diaminononan, 1,10-Diaminodecan, 1,12-Diaminododecan, Diethylentriamin, Dipropylentriamin, Triethylentetramin, Dipropylentetramin, Tetraethylenpentamin, Tetrapropylenpentamin, Pentaethylenhexamin, Pentapropylenhexamin, Hexaethylenheptamin, Hexapropylenheptamin, Heptaethylenoctamin, Heptapropylenoctamin, 1,3-Diamino-2,2-dimethyl-propan, 1,2-Diamino-2-methyl-propan, 1,3-Diamino-2-methyl-propan, 2,5-Diamino-2-dimethylhexan, N-(2-aminoethyl)-1,3-propylendiamin und N,N'-bis-(3-aminopropyl)-ethylendiamin.

Die erfindungsgemäßen Verbindungen weisen vielseitige vorteilhafte Eigenschaften auf. Sie gehören zu der Klasse der oberflächenaktiven Verbindungen nach DIN 53900, senken die Oberflächenspannung nach der Ringabreißmethode (DIN 53914) und sind nach den Resultaten im modifizierten Ross-Miles-Test (DIN 53902) als nichtschäumende bzw. schwachschäumende oberflächenaktive Stoffe zu bezeichnen. Bei geeignetem Hydrophilierungsgrad zeigen sie ausgezeichnetes Netzvermögen für Baumwolle nach der Tauchnetzmethode (DIN 53901) bei gleichzeitig gutem Egalisierverhalten nach DIN 53504. Sie besitzen ein sehr gutes Flockungsschutzvermögen gegenüber Pigmenten und Farbstoffen (DIN 53908) und eine sehr gute wasserverteilungswirkung als Reinigungsverstärker (DIN 53980) sowie eine gute Auswaschbarkeit als Schmelzmittel (DIN 53504).

Die erfindungsgemäßen Substanzen können aufgrund ihrer vielseitigen oberflächenaktiven Eigenschaften für ein breites Spektrum von Anwendungen eingesetzt werden.

Gegenstand der Erfindung ist deshalb auch die Verwendung der Verbindungen der obengenannten Struktur (I) als oberflächenaktive Mittel. Von besonderem Interesse ist die Verwendung für den Einsatz als Kupplungshilfsmittel und Präparationsmittel bei der Herstellung von Azofarbmitteln, insbesondere von

Azopigmenten, als Dispergiermittel und Verteilungsmittel für die Feinverteilung und Stabilisierung von Pflanzenschutzmitteln und schwerlöslichen Farbmitteln, vorzugsweise für die Herstellung von gut fließfähigen Pigmentdispersionen für den wäßrigen Druckfarbensektor oder zur Herstellung von Präparationen von Dispersionsfarbstoffen, wie sie bevorzugt zum Färben von natürlichen und synthetischen Fasermaterialien verwendet werden.

Von besonderem Interesse ist ferner die Verwendung für die Herstellung von Druck- und Lackfarben, für die Papiermassefärbung sowie zum Ein- und Durchfärben von Leder nach dem Bad-, Foulard-, Spritz-, Plüsch-, Bürst-, Gieß- und Walzenauftragverfahren.

Die erfindungsgemäßen Verbindungen eignen sich insbesondere als Dispergiermittel für die Herstellung von Gerbmitteldispersionen auf Metallsalzbasis und von anorganischen und organischen Pigment- und Farbmitteldispersionen zum Ein- und Durchfarben von Leder mit hohen Echtheiten und sehr guten Färbeeigenschaften. Gleichfalls können die erfindungsgemäßen Substanzen als Netz-, Broschur- und Färbereihilfsmittel auf dem Textil- und Ledersektor eingesetzt werden. Insbesondere auf dem technischen Gebiet der Ledergerbung kann bei Verwendung der erfindungsgemäßen Verbindungen auf den Einsatz der herkömmlichen cancerogenen Chromsalze verzichtet werden.

Die erfindungsgemäßen Verbindungen können einzeln oder als Gemische sowie in Kombination mit anderen nichtionogenen sowie gegebenenfalls mit anionaktiven oder kationaktiven Tensiden oder Gemischen davon eingesetzt werden. Weiterhin können sie zusammen mit üblichen Mengen an Gerüstsubstanzen oder anderen üblichen Zusätzen oder Hilfsstoffen in Emulgier- und Dispergiermittelformulierungenzur Anwendung kommen.

In den folgenden Beispielen beziehen sich "Teile" und Prozentangaben auf das Gewicht, Volumenteile verhalten sich zu Gewichtsteilen wie Liter zu Kilogramm. Die Säurezahl (SZ) wird nach DIN 53 402 bestimmt. Die Säurezahl gibt die Menge an Kaliumhydroxid in Milligramm an, die zur Neutralisation von 1 g des Reaktionsprodukts verbraucht wird. Die Hydroxylzahl wird nach DIN 53 240 bestimmt und ist ein Maß für den Gehalt an freien Hydroxylgruppen im Molekül; sie entspricht der Menge an Kaliumhydroxid in mg, welche notwendig ist, um die Menge Essigsäure zu neutralisieren, die bei der Veresterung (Acetylierung) von 1 g der Prüfsubstanz verbraucht wird. Die Aminzahl wird nach DIN 53 176 bestimmt und ist diejenige Menge an Kaliumhydroxid in Milligramm, die dem Aminanteil von 1 g Substanz äquivalent ist.

## Beispiele

### 1. Herstellung der styrolisierten Novolake

Die Herstellung der Novolake kann erfolgen, wie in Houben-Weyl, Methoden der organischen Chemie, Band XIV/2, (1963), S. 201, 272-276 sowie in A.M. Paquin, Epoxidverbindungen und Epoxidharze, (1958), S. 392 beschrieben. Sofern nicht anders angegeben, wird in den nachfolgenden Beispielen Formaldehyd in Form einer 37 gew.-%igen wäßrigen Lösung eingesetzt.

### 1.1. 3-Kern-styrol-phenol-novolak

282 g (3 Mol) Phenol und 1 g Dodecylbenzolsulfonsäure, gelöst in 10 g Wasser, wurden vorgelegt und unter Rühren bei Steigerung der Temperatur auf 110 °C bis 120 °C gemischt. Unter Stickstoffatmosphäre wurden bei gleicher Temperatur innerhalb 2 Stunden 178 g (2,2 Mol HCHO) Formaldehyd-Lösung zugetropft und 1 Stunde bei 120 °C nachgerührt. Nach Erhöhung der Temperatur auf 135 °C bis 145 °C wurden in 1,5 Stunden bei 30 bis 60 mbar 45 g Wasser (einschließlich Reaktionswasser) abdestilliert. Nach Absinken der Temperatur auf 120 °C bis 130 °C wurden 42 g Oxalsäure zugesetzt und in 30 Minuten gut verrührt. Danach wurden bei gleicher Temperatur 312 g (3 Mol) Vinylbenzol in etwa 1 Stunde zugetropft und 2 Stunden bei 130 °C nachgerührt. Unter Erhöhung der Temperatur bis auf 150 °C wurden unter Destillationsbedingungen bei ca. 20 bis 30 mbar 3,5 g nicht umgesetztes Vinylbenzol abdestilliert und weitere 2 Stunden nachgerührt. Nach dem Erkalten erhielt man ein schwach gelbrot gefärbtes sprödes Novolakharz mit einem durchschnittlichen Molgewicht von 620. Die Ausbeute betrug 596 g (96 %).

### 1.2. 5-Kern-styrol-phenol-novolak

470 g (5 Mol) Phenol und 1,8 g Dodecylbenzol, gelöst in 10 g Wasser, wurden bei steigender Temperatur von 50 °C bis 130 °C gut gemischt und analog Beispiel 1.1. unter Stickstoffatmosphäre bei 130 °C bis 140 °C mit 356,8 g (4,4 Mol HCHO) Formaldehyd-Lösung innerhalb 5 Stunden kondensiert. Nach Steigerung der Temperatur auf 135 °C bis 145 °C wurde in etwa 3 Stunden das Reaktionswasser durch

Destillation entfernt. Nach Absinken der Temperatur auf 120 °C bis 125 °C und Zumischung von 7 g Oxalsäure wurden in 2 Stunden 520 g Vinylbenzol (5 Mol) zugetropft und 3 Stunden bei 130 °C nachgerührt. Anschließend wurde die Temperatur bis auf 150 °C erhöht und 3,5 Stunden bei gleichzeitigem Abdestillieren von 6,4 g Vinylbenzol bei 20 bis 30 mbar nachgerührt. Nach Abkühlung des Reaktionsgemisches erhielt man ein gelbrotes sprödes Novolakharz mit einem durchschnittlichen Molgewicht von 1038 und einer Ausbeute von 1003 g (96 %).

1.3. 7-Kern-styrol-phenol-novolak

658 g (7 Mol) Phenol und 2,3 g Dodecylbenzolsulfonat, gelöst in 10 ml Wasser, wurden bei einer Temperatur bis zu 120 °C gut gemischt und wie in Beispiel 1.1. beschrieben mit 535 g (6,6 Mol HCHO) Formaldehyd-Lösung bei 130 °C bis 140 °C unter Entfernung des Reaktionswassers in 8 Stunden kondensiert. Nach Erniedrigung der Temperatur auf 120 °C bis 125 °C und Zugabe von 9,8 g Oxalsäure wurden in 3 Stunden 728 g (7 Mol) Vinylbenzol zugetropft und weitere 4 Stunden bei 125 °C bis 130 °C nachgerührt. In weiteren 3 Stunden wurden bei 140 °C bis 150 °C bei einem Unterdruck von 20 bis 30 mbar 7,9 g Vinylbenzol abdestilliert. Das aufgearbeitete feste Novolakharz war leicht gelbrot gefärbt und besitzt ein Molgewicht von ca. 1458. Die Ausbeute betrug 1394 g (95,6 %).

1.4. 7-Kern-p-vinyltoluol-phenol-novolak

658 g (7 Mol) Phenol und 2,5 g Dodecylbenzolsulfonat, gelöst in 10 g Wasser, wurden nach guter Durchmischung bei 120 °C analog Beispiel 1.3. bei 130 °C bis 140 °C unter Abdestillieren des Reaktionswassers mit 535 g (6,6 Mol HCHO) Formaldehyd-Lösung in 10 Stunden kondensiert. Nach Abfallen der Temperatur auf 115 °C bis 125 °C wurden nach Zugabe von 10,5 g Oxalsäure 826 g (7 Mol) p-Vinyltoluol innerhalb 3,5 Stunden zugetropft und weitere 4 Stunden bei gleicher Temperatur gerührt. Nach Erhöhung der Temperatur auf 140 °C bis 150 °C wurden unter Vakuum von 20 bis 30 mbar 7,5 g p-Vinyltoluol abdestilliert. Man erhielt ein sprödes gelbbraunes Novolakharz mit einem Molekulargewicht von ca. 1556. Ausbeute etwa 1494 g (96 %).

1.5. 7-Kern-styrol-phenol-novolak

658 g (7 Mol) Phenol und 1,5 g Dodecylbenzolsulfonsäure, gelöst in 10 g Wasser, wurden bei 60 °C bis 70 °C gemischt und mit Stickstoff überlagert. Bei gleicher Temperatur wurden 189,5 g Paraformaldehyd (95 %ig) innerhalb 1,5 Stunden portionsweise eingetragen und eine weitere Stunde bei 70 °C nachgerührt. Anschließend wurde die Temperatur in 3 Stunden auf 100 °C erhöht und eine weitere Stunde nachgerührt. Die Temperatur wurde dann in 2 Stunden auf 120 °C gesteigert und eine weitere Stunde gerührt. Danach wurde bei 135 °C bis 140 °C in 4 Stunden das Reaktionswasser destillativ entfernt. Nach Abkühlung auf 110 °C bis 120 °C wurden nach Zugabe von 13,5 g Oxalsäure analog Beispiel 1.3. 936 g (9 Mol) Vinylbenzol in 3 Stunden zugetropft und weitere 4 Stunden nachgerührt. Nach Erhöhung der Temperatur auf 140 °C bis 150 °C wurden innerhalb 3 Stunden bei 10 bis 20 mbar 8,6 g Vinylbenzol abdestilliert. Nach Abkühlung auf etwa 20 °C erhielt man ein festes schwach gelbrot gefärbtes Novolakharz mit einem Molgewicht von 1666 mit einer Ausbeute von etwa 1591 g (95 %).

1.6. 9-Kern-styrol-phenol-novolak

846 g (9 Mol) Phenol und 3 g Dodecylbenzolsulfonsäure, gelöst in 10 g Wasser, wurden analog Beispiel 1.3. bei steigender Temperatur von 50 °C auf 130 °C unter Stickstoffatmosphäre gemischt und nach Zutropfen von 713,5 g (8,8 Mol HCHO) Formaldehyd-Lösung bei gleicher Temperatur 6 Stunden kondensiert. Nach Erhöhung der Temperatur auf 150 °C wurde in etwa 3 Stunden das Reaktionswasser entfernt. Nach Absinken der Temperatur auf 110 °C bis 120 °C wurden nach Zugabe von 9 g Oxalsäure innerhalb 3 Stunden 936 g (9 Mol) Vinylbenzol zugetropft und 4 Stunden nachgerührt. Bei steigender Temperatur bis auf 150 °C wurden in 3 Stunden bei einem Vakuum von 10 bis 20 mbar 8,7 g Vinylbenzol entfernt. Das erhaltene Novolakharz ist fest und von schwach gelbroter Farbe und einem Molgewicht von 1878. Ausbeute etwa 1803 g (96 %).

1.7. 5-Kern-styrol-p-phenylphenol-novolak

850 g (5 Mol) p-Phenylphenol wurden vorgelegt und bei einer Temperatur von 60°C bis 75°C unter langsamem Rühren innerhalb von 2 Stunden 120 g Paraformaldehyd portionsweise eingetragen. Unter Stickstoffatmosphäre wurde eine Stunde lang bei 75°C gerührt und nach Erhöhung der Temperatur auf 120°C eine Lösung aus 4 g Dodecylbenzolsulfonsäure in 12 g Wasser zugetropft. Danach ließ man 10 Stunden bei 120°C bis 130°C unter Durchleiten von Stickstoffgas rühren, wobei das Reaktionswasser weitgehend entfernt wurde. Nach Reduzieren des Druckes auf etwa 20 bis 30 mbar ließ man noch 2 Stunden bei 120 bis 130°C rühren. Bei gleicher Temperatur wurden 5 g Oxalsäure zugegeben und innerhalb von 4 bis 5 Stunden 520 g (5 Mol) Vinylbenzol unter Stickstoffatmosphäre zugetropft und weitere 3 Stunden bei 120°C bis 130°C nachgerührt. Nach Steigerung der Temperatur auf 140°C bis 150°C wurden unter reduziertem Druck bei 20 bis 30 mbar 11,1 g Vinylbenzol abdestilliert. Nach dem Erkalten erhielt man ein sprödes, grünbraunes, festes Novolakharz mit einem durchschnittlichen Molgewicht von 1418. Ausbeute etwa 1368 g Novolak (96 %).

1.8. 5-Kern-styrol-β-naphthol-novolak

720 g (5 Mol) β-Naphthol und 10,7 g Oxalsäure wurden unter Aufheizung auf 120°C bis 130°C bei Überlagerung von Stickstoff gut gemischt und innerhalb von 1 bis 1,5 Stunden 520 g (5 Mol) Vinylbenzol zugetropft. Nach einer Rührzeit von 2 Stunden wurde die Temperatur auf 140°C bis 145°C gesteigert und 2 Stunden bei einem Unterdruck von 10 bis 20 mbar gerührt, wonach kein freies Vinylbenzol gefunden wurde. Nach Absinken der Temperatur auf 120°C bis 125°C wurden 2,5 g Dodecylbenzolsulfonsäure, gelöst in 12 ml Wasser, zugesetzt und innerhalb 1,5 bis 2 Stunden 356,8 g Formaldehyd-Lösung (4,4 Mol HCHO) eingetragen. Bei gleicher Temperatur wurde 1 Stunde nachgerührt und anschließend die Temperatur auf 130°C bis 140°C gesteigert wobei unter reduziertem Druck von 10 bis 30 mbar das Reaktionswasser innerhalb 2 Stunden abdestilliert wurde. Man erhielt ein gelbbraunes sprödes Novolakharz mit einem durchschnittlichen Molgewicht von 1288. Die Ausbeute betug 1249 (97 %).

1.9. 7-Kern-nonylphenol-novolak

1540 g (7 Mol) Nonylphenol, 189,5 g Paraformaldehyd (95 %ig) und 12,3 g konzentrierte Salzsäure wurden bei etwa 25°C gemischt und unter Stickstoffatmosphäre 14 Stunden lang unter Rückfluß gerührt. Danach wurde die Temperatur bis auf 135°C gesteigert und innerhalb von 4 Stunden das Reaktionswasser abdestilliert. Anschließend wurde bei einem Druck von etwa 20 bis 30 mbar 2 Stunden bei 135°C bis 140°C nachgerührt. Ausbeute etwa 1602 g (99,4 %) dunkelbraunes sprödes Novolakharz mit einem durchschnittlichen Molgewicht von etwa 1612.

1.10. 7-Kern-isopropenylbenzol-phenol-novoak

658 g (7 Mol) Phenol und 2,3 Teile Dodecylbenzolsulfonat, gelöst in 10 ml Wasser, wurden bei einer Temperatur bis zu 120°C gut gemischt und wie in Beispiel 1.1. beschrieben mit 535 g (6,6 Mol HCHO) Formaldehyd-Lösung bei 130°C bis 140°C unter Entfernung des Reaktionswassers in 8 Stunden kondensiert. Nach Erniedrigung der Temperatur auf 120°C bis 125°C und Zugabe von 9,8 g Oxalsäure wurden in 3 Stunden 826 g (7 Mol) Isopropenylbenzol zugetropft und weitere 4 Stunden bei 125°C bis 130°C nachgerührt. In weiteren 3 Stunden wurden bei 140°C bis 150°C bei einem Unterdruck von 20 bis 30 mbar 7,9 g Isopropenylbenzol abdestilliert. Das aufgearbeitete feste Novolakharz ist leicht gelbrot gefärbt und besitzt ein Molgewicht von ca. 1556. Die Ausbeute betrug 1484 g (95 %).

2. Herstellung der Novolak-Oxalkylate

2.1. 3-Kern-styrol-phenol-novolak-oxethylat

200 Teile 3-Kern-styrol-phenol-novolak aus Beispiel 1.1. wurden nach Zugabe von 1,2 Teilen pulverisiertem Ätznatron unter Rühren und Zuführen von 232 Teilen Ethylenoxid unter Aufrechterhaltung eines Druckes von 2 bis 4 bar und einer Temperatur von 150°C bis 160°C oxethyliert. Nachdem alles Ethylenoxid in das Reaktionsgefäß gedrückt worden war, ließ man noch eine Stunde bei 150°C bis 160°C rühren. Das erhaltene Produkt ist ein oxethylierter 3-Kern-styrol-phenol-novolak mit 18 Ethylenoxy-Einheiten pro Molekül und mit einer Hydroxylzahl von 106.

2.2. 5-Kern-styrol-phenol-novolak-oxalkylat

200 Teile 5-Kern-styrol-phenol-novolak aus Beispiel 1.2. wurden unter Zugabe von 4,5 Teilen Natriummethylat in einem Druckgefäß unter Rühren und Zuführen von 336 Teilen Propylenoxid und 379 Teilen Ethylenoxid bei 145 °C bis 170 °C unter Aufrechterhaltung eines Druckes von etwa 3,4 bis 5 bar oxalkyliert. Nachdem alles Alkylenoxid in das Druckgefäß gepreßt worden war, ließ man noch eine Stunde bei 150 °C bis 160 °C rühren. Das erhaltene Oxalkylat enthielt als Hauptprodukt einen oxalkylierten 5-Kern-styrol-phenol-novolak mit im Mittel 30 Propylenoxy-Einheiten und 45 Ethylenoxy-Einheiten pro Molekül. Das Produkt hat eine Hydroxylzahl von 55 bis 65.

2.3. 7-Kern-styrol-phenol-novolak-oxethylat

200 Teile 7-Kern-styrol-phenol-novolak nach Beispiel 1.3 wurden nach Zugabe von 1,0 Teilen pulverisiertem Ätznatron mit 573 Teilen Ethylenoxid analog Beispiel 2.1 umgesetzt. Das erhaltene Produkt enthält als Hauptbestandteil ein 7-Kern-styrol-phenol-novolak-oxethylat mit im Mittel 95 Ethylenoxy-Einheiten pro Molekül und einer Hydroxylzahl von 65 bis 75.

2.4. 7-Kern-p-vinyltoluol-phenol-novolak-oxethylat

200 Teile 7-Kern-p-vinyltoluol-phenol-novolak nach Beispiel 1.4. wurden nach Zugabe von 1,0 Teilen pulverisiertem Ätznatron mit 573 Teilen Ethylenoxid analog Beispiel 2.3. umgesetzt. Das erhaltene Produkt enthält als Hauptbestandteil ein 7-Kern-p-vinyltoluol-phenol-novolak-Oxethylat mit im Mittel 101 Ethylenoxy-Einheiten pro Molekül und einer Hydroxylzahl von 60 bis 70.

2.5. 7-Kern-styrol-phenol-novolak-oxethylat

200 Teile 7-Kern-styrol-phenol-novolak nach Beispiel 1.5 wurden nach Zugabe von 1,0 Teilen pulverisiertem Ätznatron mit 573 Teilen Ethylenoxid analog Beispiel 2.4. umgesetzt. Das erhaltene Produkt enthält als Hauptbestandteil ein 7-Kern-styrol-phenol-novolak-oxethylat mit im Mittel 108 Ethylenoxy-Einheiten pro Molekül und einer Hydroxylzahl von 60 bis 70.

2.6. 9-Kern-styrol-phenol-novolak-oxethylat

200 Teile 9-Kern-styrol-phenol-novolak nach Beispiel 1.6 wurden nach Zugabe von 9 Teilen Natriummethylat (30 %ig in Methanol) in einem Druckgefäß unter Rühren auf 80 °C bis 90 °C erhitzt und unter reduziertem Druck wurde das Methanol abgezogen. Nach Erhöhung der Temperatur auf 150 °C bis 170 °C wurden 573 Teile Ethylenoxid bei einem Druck von 4 bis 6 bar aufgepreßt. Danach ließ man noch eine Stunde bei 150 °C bis 160 °C rühren. Das erhaltene wachsartige braune 9-Kern-styrol-phenol-novolak-oxethylat enthält im Mittel 122 Ethylenoxy-Einheiten pro Molekül und besitzt eine Hydroxylzahl von 80 bis 90.

2.7. 5-Kern-styrol-p-phenylphenol-novolak-oxethylat

200 Teile 5-Kern-styrol-p-phenylphenol-novolak gemäß Beispiel 1.7 wurden in einem Druckgefäß vorgelegt und geschmolzen. Nach Zugabe von 2 Teilen frisch pulverisiertem Natriumhydroxid wurde analog Beispiel 2.1 unter Stickstoffatmosphäre mit 465 Teilen Ethylenoxid oxethyliert. Das erhaltene zähflüssige grüne Novolakoxethylat enthält im Mittel 75 Ethylenoxy-Einheiten pro Molekül und hat eine Hydroxylzahl von 55 bis 65.

2.8. 5-Kern-styrol-$\beta$-naphthol-novolak-oxethylat

200 Teile 5-Kern-styrol-$\beta$-naphthol-novolak aus Beispiel 1.8 wurden nach Zugabe von 9 Teilen Natriummethylat (30 %ig in Methanol) in einem Druckgefäß unter Rühren auf 80 °C bis 90 °C erhitzt und unter reduziertem Druck wurde das Methanol abgezogen. Nach Erhöhung der Temperatur auf 150 °C bis 170 °C wurden 528,6 Teile Ethylenoxid bei einem Druck von 4 bis 6 bar aufgepreßt. Danach ließ man noch eine Stunde bei 150 °C bis 160 °C rühren. Das erhaltene wachsartige braune Novolakoxethylat enthält im Mittel 77,4 Ethylenoxy-Einheiten pro Molekül und besitzt eine Hydroxylzahl von 59,8.

2.9. 7-Kern-nonylphenol-novolak-oxethylat

200 Teile 7-Kern-nonylphenol-novolak nach Beispiel 1.9. wurden nach Zugabe von 1,2 Teilen Natriumhydroxid mit 568,9 Teilen Ethylenoxid, wie in Beispiel 2.1. beschrieben, umgesetzt. Das erhaltene Novolak-Oxethylat entsprach einem 7-Kern-nonylphenol-novolak mit 105 Ethylenoxid-Einheiten pro Molekül und einer Hydroxylzahl von 62 bis 68.

2.10. 7-Kern-isopropenylbenzol-phenol-novolak-oxethylat

200 Teile 7-Kern-isopropenylbenzol-phenol-novolak nach Beispiel 1.10. wurden nach Zugabe von 1,0 Teilen pulverisiertem Ätznatron mit 536 Teilen Ethylenoxid analog Beispiel 2.1. umgesetzt. Das erhaltene Produkt enthält als Hauptbestandteil ein 7-Kern-isopropenylbenzol-phenol-novolak-oxethylat mit im Mittel 95 Ethylenoxy-Einheiten pro Molekül und einer Hydroxyzahl von 65 bis 75.

3. Herstellung der Ester der oxalkylierten Novolake

3.1. 3-Kern-styrol-phenol-novolak-oxethylat-sulfosuccinat

300 Teile 3-Kern-styrol-phenol-novolak-oxethylat nach Beispiel 2.1 und 62,6 Teile Maleinsäureanhydrid wurden bei 70 °C bis 80 °C in Stickstoffatmosphäre 3 Stunden gerührt. Zu dem erhaltenen Maleinsäurehalbester-Produkt ließ man eine Lösung aus 80,4 Teilen Natriumsulfit in 820 Teilen Wasser zulaufen und zwischen 1 und 2 Stunden bei 70 °C bis 80 °C so lange rühren, bis der Ansatz klar wasserlöslich war. Die Menge des mit der Natriumsulfitlösung zugesetzten Wassers kann 50 bis 85 Gew.-% der das Produkt enthaltenden Lösung betragen. Das erhaltene Hauptprodukt ist ein Sulfobernsteinsäurehalbester, bei dem alle 3 Polyoxyethylenketten endständig umgesetzt sind.

3.2. 5-Kern-styrol-phenol-novolak-oxalkylat-sulfosuccinat

300 Teile 5-Kern-styrol-phenol-novolak-oxalkylat gemäß Beispiel 2.2. und 30,7 Teile Maleinsäureanhydrid wurden gemäß Beispiel 3.1. 3 Stunden bei einer Temperatur von 70 °C bis 80 °C gerührt und danach mit einer Lösung aus 39,5 Teilen Natriumsulfit in 687,5 Teilen Wasser umgesetzt, wobei durch Variation der Wassermenge ein Wassergehalt der fertigen Lösung zweckmäßig zwischen 50 und 80 Gew.-% eingestellt werden kann. Das Hauptprodukt ist ein oxalkylierter 5-Kern-styrol-phenol-novolak, bei dem alle 5 Polyoxyalkylenketten zum Sulfobernsteinsäurehalbester umgesetzt sind.

3.3. 7-Kern-styrol-phenol-novolak-oxethylat-phthalsäurehalbester-1.3-propandiamin-Salz

300 Teile 7-Kern-styrol-phenol-novolak-oxethylat aus Beispiel 2.3. wurden nach Zugabe von 0,3 Teilen Ätznatron entsprechend der Hydroxylzahl mit 55,1 Teilen Phthalsäureanhydrid 4 Stunden bei einer Temperatur von 110 °C bis 120 °C unter Stickstoffatmosphäre gerührt. Nach Abkühlung auf 50 °C bis 60 °C wurden zu dem erhaltenen Produkt, entsprechend einer Säurezahl von 72,9, in 30 bis 60 Minuten 28,8 Teile 1.3-Propandiamin zugetropft und 2 Stunden bei 50 °C bis 60 °C gerührt. Das entstandene Aminsalz besitzt einen pH-Wert von 8,4 und eine Aminzahl von etwa 135.

3.4. 7-Kern-styrol-phenol-novolak-oxethylat-phthalat-sulfosuccinat-1.3-propandiamin-Salz

300 Teile 7-Kern-styrol-phenol-novolak-oxethylat aus Beispiel 2.3. wurden nach Zugabe von 0,2 Teilen Ätznatron entsprechend der halben Hydroxylzahl mit 27,05 Teilen Phthalsäureanhydrid analog Beispiel 3.3. verestert. Nach Abkühlung der Temperatur auf 70 °C bis 80 °C wurden entsprechend restlicher Hydroxyzahl 17,9 Teile Maleinsäureanhydrid zugemischt und weitere 3 Stunden bei gleicher Temperatur gerührt. Nach Zulauf einer Lösung aus 19 Teilen Natriumhydrogensulfit und 675,9 Teilen Wasser wurde weitere 2 Stunden bei 70 °C bis 80 °C gerührt. Nach Absinken der Temperatur auf 20 °C bis 25 °C wurden zu dem entstandenen Produkt, entsprechend einer Säurezahl von 70,4, innerhalb von 30 bis 60 Minuten 27,9 Teile 1.3-Propandiamin zugetropft und 2 Stunden bei 20 °C bis 25 °C gerührt. Das vorliegende Aminsalz besitzt einen pH-Wert von 6,9 bis 7,1 und eine Aminzahl von etwa 130.

3.5. 7-Kern-vinyltoluol-phenol-novolak-oxethylat-bernsteinsäurehalbester-1.2-ethandiamin-Salz

300 Teile 7-Kern-vinyltoluol-phenol-novolak-oxethylat nach Beispiel 2.4. wurden nach Zugabe von 0,2 Teilen Ätznatron entsprechend der Hydroxylzahl mit 37,4 Teilen Bernsteinsäureanhydrid 4 Stunden bei einer Temperatur von 110°C bis 120°C unter Stickstoffgas gerührt. Nach Abkühlung auf 50°C bis 60°C wurden zu dem entstandenen Produkt, entsprechend einer Säurezahl von 79,7, in 45 bis 60 Minuten 28,8 Teile 1.2-Ethandiamin zugetropft und 2 Stunden bei 50°C bis 55°C gerührt. Das so entstandene Aminsalz besitzt einen pH-Wert von 8,1 und eine Aminzahl von etwa 132.

3.6. 7-Kern-styrol-phenol-novolak-oxethylat-benzoat-sulfobernsteinsäurehalber

300 Teile 7-Kern-styrol-phenol-novolak-oxethylat nach Beispiel 2.3. wurden entsprechend der halben Hydroxylzahl mit 22,5 Teilen Benzoesäure bei etwa 20°C gut gemischt und unter Stickstoffatmosphäre nach Zugabe von 1,5 Teilen p-Toluolsulfonsäure und 150 Volumenteilen Xylol als Schleppmittel auf 150°C bis 160°C erhitzt, wobei innerhalb von 8 Stunden das Reaktionswasser in einem Wasserabscheider entfernt wurde. Nach Abdestillieren des Xylols und Erreichen einer Säurezahl von etwa 5 wurde die Temperatur auf 70°C bis 80°C gesenkt und 18,1 Teile Maleinsäureanhydrid entsprechend Resthydroxylzahl sowie 0,4 Teile Ätznatron wurden zugegeben und weitere 4 Stunden bei gleicher Temperatur gerührt. Anschließend ließ man eine Lösung aus 23,3 Teilen Natriumsulfit und 676 Teilen Wasser zulaufen, rührte 1 bis 2 Stunden bei 70°C bis 80°C, bis der Ansatz klar wasserlöslich wurde. Die Menge des verwendeten Wassers kann zwischen 50 und 85 % der das Produkt enthaltenden Lösung betragen. Das Hauptprodukt ist ein Mischester eines oxethylierten 7-Kern-styrol-phenol-novolaks, bei dem die Polyoxyethylenketten endständig mit durchschnittlich 3,5 Benzoesäuregruppen und 3,5 Sulfobernsteinsäurehalbestergruppen modifiziert sind.

3.7. 7-Kern-styrol-phenol-novolak-oxethylat-phthalsäurehalbester-diethylentriamin-Salz

300 Teile 7-Kern-styrol-phenol-novolak-oxethylat nach Beispiel 2.5. wurden nach Zugabe von 0,3 Teilen Ätznatron entsprechend Hydroxylzahl mit 45,7 Teilen Phthalsäureanhydrid 4 Stunden bei einer Temperatur von 110°C bis 120°C unter Stickstoffgas gerührt. Nach Absenken der Temperatur auf 50°C bis 60°C wurden zu dem entstandenen Produkt, entsprechend einer Säurezahl von 57,4, innerhalb von 45 bis 60 Minuten 37,0 Teile Diethylentriamin zugetropft und 2 Stunden bei 50°C bis 60°C nachgerührt. Das so entstandene Aminsalz besitzt einen pH-Wert von 8,5 und eine Aminzahl von etwa 286.

3.8. 9-Kern-styrol-phenol-novolak-oxethylat-phthalsäurehalbester-1.3-propandiamin-Salz

300 Teile 9-Kern-styrol-phenol-novolak-oxethylat gemäß Beispiel 2.6. wurden nach Zugabe von 0,35 Teilen Ätznatron entsprechend Hydroxylzahl mit 55,4 Teilen Phthalsäureanhydrid 5 Stunden bei einer Temperatur von 110°C bis 120°C unter Stickstoffatmosphäre gerührt. Nach Absinken der Temperatur auf 50°C bis 60°C wurden zu dem entstandenen Produkt, entsprechend einer Säurezahl von 93,7, in 60 bis 75 Minuten 44,0 Teile 1.3-Propandiamin zugetropft und 3 Stunden bei 50°C bis 60°C gerührt. Das entstandene Aminsalz besitzt einen pH-Wert von 8,1 und eine Aminzahl von etwa 137.

3.9. 5-Kern-styrol-p-phenylphenol-novolak-oxethylat-phthalsäurehalbester-1.3-propandiamin-Salz

300 Teile 5-Kern-styrol-p-phenylphenol-novolak-oxethylat nach Beispiel 2.7. wurden nach Zugabe von 0,3 Teilen Ätznatron entsprechend Hydroxylzahl mit 47,5 Teilen Phthalsäureanhydrid 4 Stunden bei einer Temperatur von 110°C bis 120°C unter Stickstoffatmosphäre gerührt. Nach Abkühlung auf 50°C bis 60°C wurden zu dem entstandenen Produkt, entsprechend einer Säurezahl von 40,1, in 30 bis 60 Minuten 18,4 Teile 1,3-Propandiamin zugetropft und 2 Stunden bei 50°C bis 60°C nachgerührt. Das entstandene Aminsalz besitzt einen pH-Wert von 8,4 und eine Aminzahl von etwa 76,7.

3.10. 5-Kern-styrol-β-naphthol-novolak-oxethylat-maleinsäurehalbesterdiethylentriamin-Salz

300 Teile 5-Kern-styrol-β-naphthol-novolak-oxethylat nach Beispiel 2.8. wurden nach Zugabe von 0,2 Teilen Ätznatron entsprechend Hydroxylzahl mit 31,4 Teilen Maleinsäureanhydrid 3,5 Stunden bei einer Temperatur von 70°C bis 80°C unter Stickstoffatmosphäre gerührt. Nach Abkühlung auf 50°C bis 60°C wurden zu dem entstandenen Produkt, entsprechend einer Säurezahl von 54, in 30 bis 60 Minuten 66,4 Teile Diethylentriamin zugetropft und 2 Stunden bei 50°C bis 60°C nachgerührt. Das entstandene Aminsalz

besitzt einen pH-Wert von 8,7 und eine Aminzahl von etwa 148.

3.11. 7-Kern-styrol-phenol-novolak-oxethylat-harzsäure-sulfobernsteinsäuremischester

300 Teile 7-Kern-styrol-phenol-novolak-oxethylat nach Beispiel 2.3 wurden entsprechend 3/7 Anteilen der Hydroxylzahl mit 48,4 Teilen disproportioniertem Kolophonium auf 70 bis 80 °C erwärmt und unter Stickstoffgas eine Stunde lang gerührt. Nach Zugabe von 6 Teilen Zinnpulver, 1,5 Teilen p-Toluolsulfonsäure und 150 ml Xylol wurde 16 Stunden lang auf 150 bis 160 °C erhitzt und das Reaktionswasser durch Auskreisen entfernt. Danach wurde das Xylol abdestilliert. Das Produkt hat eine Säurezahl von weniger als 20. Anschließend wurden 14,0 Teile Maleinsäureanhydrid entsprechend der Resthydroxylzahl zugesetzt und weitere 3 Stunden bei 70 bis 80 °C unter Stickstoffgas erhitzt. Zu dem erhaltenen Maleinsäurehalbester-Produkt ließ man eine Lösung aus 18,6 Teilen Natriumsulfit in 523 Teilen Wasser zulaufen und zwischen 1 und 2 Stunden bei 70 bis 80 °C so lange rühren, bis der Ansatz klar wasserlöslich geworden war. Die Menge des mit der Natriumsulfitlösung zugesetzten Wassers kann 50 bis 85 Gew.-% der das Produkt enthaltenden Lösung betragen. Das Hauptprodukt ist ein 7-Kern-novolak-oxethylat-mischester, bei dem 3 Polyoxyethylenketten mit Harzsäuren verestert und 4 mit Sulfobernsteinsäure halbverestert sind.

3.12. 7-Kern-styrol-phenol-novolak-oxethylat-harzsäure-maleinsäure-mischester-diethylentriamin-Salz

300 Teile 7-Kern-styrol-phenol-novolak-oxethylat nach Beispiel 2.3 wurden entsprechend 3/7 Anteilen der Hydroxylzahl mit 39,2 Teilen disproportioniertem Kolophonium auf 70 bis 80 °C erwärmt und unter Stickstoffgas eine Stunde lang gerührt. Nach Zugabe von 6 Teilen Zinnpulver, 1,5 Teilen p-Toluolsulfonsäure und 150 ml Xylol wurde 16 Stunden lang auf 150 bis 160 °C erhitzt und das Reaktionswasser durch Auskreisen entfernt. Danach wurde das Xylol abdestilliert. Das Produkt hat eine Säurezahl von weniger als 18. Anschließend wurden 14,0 Teile Maleinsäureanhydrid auf 4/7 Anteile der Hydroxylzahl zugesetzt, und weitere 3 Stunden bei 70 bis 80 °C unter Stickstoffgas erhitzt. Nach Absenkung der Temperatur auf 60 bis 70 °C wurden entsprechend einer Säurezahl von 39,3 innerhalb 30 bis 45 Minuten 26,5 Teile Diethylentriamin zugetropft und 1 Stunde bei 50 bis 60 °C nachgerührt. Das vorliegende Aminsalz besitzt einen pH-Wert von 8,4 und eine Aminzahl von etwa 110,5.

3.13. 9-Kern-styrol-phenol-novolak-oxethylat-harzsäure-ölsäure-maleinsäure-mischester- diethylentriamin-Salz

300 Teile 9-Kern-styrol-phenol-novolak-oxethylat nach Beispiel 2.6 wurden entsprechend 4/9 Anteilen der Hydroxylzahl mit 37,9 Teilen disproportioniertem Kolophonium und 35,0 Teilen Ölsäure in Gegenwart von 2 Teilen p-Toluolsulfonsäure und 4 Teilen Zinnpulver analog Beispiel 3.3. verestert. Nach Abkühlung auf 70 bis 80 °C wurden unter Stickstoffatmosphäre 24,8 Teile Maleinsäureanhydrid entsprechend 5/9 Anteilen der Hydroxylzahl zugesetzt und 3,5 Stunden bei 70 bis 80 °C gerührt. Nach Einstellung der Temperatur auf 50 bis 60 °C wurden, entsprechend einer Säurezahl von 35,4, 35,4 Teile Triethylentetramin zugetropft und 2 Stunden bei gleicher Temperatur gerührt. Das vorliegende Aminsalz besitzt einen pH-Wert von 8,9 und eine Aminzahl von etwa 141,3.

3.14. 7-Kern-nonylphenol-novolak-oxethylat-phthalsäurehalbester-1.3-propandiamin-Salz

300 Teile 7-Kern-nonylphenol-novolak-oxethylat nach Beispiel 2.9 wurden gemäß Hydroxylzahl nach Zugabe von 0,1 Teilen Ätznatron mit 51,4 Teilen Phthalsäureanhydrid analog Herstellungsbeispiel 3.8. bei einer Temperatur von 110 bis 120 °C in 4 Stunden halbverestert. Anschließend wurden bei 65 bis 75 °C, entsprechend einer Säurezahl von 54,0, 25,1 Teile 1.3-Propandiamin in 30 bis 60 Minuten zugeführt und 1 Stunde gerührt. Das vorliegende Aminsalz besitzt einen pH-Wert von 8,1 und eine Aminzahl von etwa 120.

3.15. 7-Kern-nonylphenol-novolak-oxethylat-bernsteinsäurehalbester-1.2-ethandiamin-Salz

300 Teile 7-Kern-nonylphenol-novolak-oxethylat nach Beispiel 2.9 wurden gemäß Hydroxylzahl nach Zugabe von 0,1 Teilen Ätznatron mit 34,7 Teilen Bernsteinsäureanhydrid gemäß Herstellungsbeispiel 3.14 halbverestert und entsprechend einer Säurezahl von 66,2 mit 22,2 Teilen 1.2-Ethandiamin neutralisiert. Das erhaltene Aminsalz hat einen pH-Wert von 8,3 und eine Aminzahl von etwa 125.

3.16. 7-kern-nonylphenol-novolak-oxethylat-phthalat-sulfosuccinat-mischester

300 Teile 7-Kern-nonylphenol-novolak-oxethylat nach Beispiel 2.9 wurden gemäß halber Hydroxylzahl nach Zugabe von 0,1 Teilen Ätznatron mit 22,1 Teilen Phthalsäureanhydrid unter Stickstoffgas bei einer Temperatur von 100 bis 120 °C in 4 Stunden und nach Abkühlung auf 70 bis 80 °C mit 19,5 Teilen Maleinsäureanhydrid entsprechend Resthydroxylzahl in 3 Stunden halbverestert. Anschließend wurde eine Lösung aus 25,1 Teilen Natriumsulfit und 671 Teilen Wasser zugesetzt und 60 bis 120 Minuten bei 70 bis 80 °C gerührt, bis der Ansatz klar wasserlöslich geworden war. Danach wurde mit verdünnter Natronlauge auf pH 6,9 bis 7,0 neutralisiert. Die Menge des zugesetzten Wassers kann zwischen 50 und 80 % der das Produkt enthaltenden Lösung betragen.

3.17. 7-Kern-nonylphenol-novolak-oxethylat-phthalat-sulfosuccinat-1.3-propandiamin-Salz

300 Teile 7-Kern-nonylphenol-novolak-oxethylat nach Beispiel 2.9 wurden entsprechend halber Hydroxylzahl nach Zugabe von 0,2 Teilen Ätznatron mit 25,7 Teilen Phthalsäureanhydrid und 17,0 Teilen Maleinsäureanhydrid auf Resthydroxylzahl gemäß Herstellungsbeispiel 3.16 halbverestert und anschließend bei 70 °C bis 80 °C mit einer Lösung aus 181 Teilen Natriumhydrogensulfit und 668 Teilen Wasser versetzt und 2 Stunden bis zum Klarwerden des Ansatzes gerührt. Bei gleicher Temperatur wurden nach einer Säurezahl von etwa 52,7 in 60 bis 90 Minuten 25,0 Teile 1.2-Propandiamin zugetropft und 1 Stunde nachgerührt. Das erhaltene Aminsalz besitzt einen pH-Wert von 8,7 und eine Aminzahl von etwa 100.

3.18. 7-Kern-styrol-phenol-novolak-oxethylat-benzoat-sulfobernsteinsäurehalbester

300 Teile 7-Kern-styrol-phenol-novolak-oxethyat nach Beispiel 2.3 wurden entsprechend dem 3/7 Anteil der Hydrorylzahl mit 17,2 Teilen Benzoesäure bei etwa 20 °C gut gemischt und unter Stickstoffatmosphäre nach Zugabe von 1,5 Teilen p-Toluolsulfonsäure und 150 Volumenteilen Xylol auf 150 bis 160 °C erhitzt, wobei innerhalb von 8 Stunden das Reaktionswasser durch Auskreisen entfernt wurde. Nach Abdestillieren des Schleppmittels und Erreichen einer Säurezahl von etwa 5 wurde die Temperatur auf 70 bis 80 °C gesenkt und 18,0 Teile Maleinsäureanhydrid auf 4/7 Anteile der Hydroxylzahl sowie 0,4 Teile Ätznatron zugegeben und weitere 4 Stunden bei gleicher Temperatur gerührt. Nach Absinken der Temperatur auf 50 bis 60 °C wurde entsprechend einer Säurezahl von 33,5 in 30 bis 60 Minuten mit 21 Teilen Diethylentriamin neutralisiert und 2 Stunden bei gleicher Temperatur nachgerührt. Das vorliegende Aminsalz besitzt einen pH-Wert von 8,8 und eine Aminzahl von etwa 92.

3.19. 7-Kern-isopropenylbenzol-phenol-novolak-oxethylat-sulfobernsteinsäurehalbester-1.2-Propandiamin-Salz

300 Teile 7-Kern-isopropenylbenzol-phenol-novolak-oxethyat nach Beispiel 2.10. wurden nach Zugabe von 0,2 Teilen Ätznatron entsprechend halber Hydroxylzahl mit 27,3 Teilen Phthalsäureanhydrid analog Beispiel 3.3. verestert. Nach Abkühlung auf 70 °C bis 80 °C wurden entsprechend restlicher Hydroxylzahl 18,0 Teile Maleinsäureanhydrid zugemischt und weitere 3 Stunden bei gleicher Temperatur gerührt. Nach Zulauf einer Lösung aus 19 Teilen Natriumhydrogensulfit und 675,9 Teilen Wasser wurde weitere 2 Stunden bei 70 °C bis 80 °C gerührt. Nach Absinken der Temperatur auf 20 °C bis 25 °C wurden entsprechend einer Säurezahl von 61,6 innerhalb von 30 bis 60 Minuten 593 Teile 1.3-Propandiamin, oxethyliert mit 32 Mol Ethylenoxid, zugetropft und 2 Stunden bei 20 °C bis 25 °C nachgerührt. Das vorliegende Aminsalz besitzt einen pH-Wert von 6,9 bis 7,1 und eine Aminzahl von etwa 93.

Anwendungsbeispiele

Die Anwendung der erfindungsgemäßen Substanzen als Kupplungshilfs- und Präparationsmittel für Azopigmente sowie als Dispergiermittel für die Herstellung von anorganischen und organischen Pigmentdispersionen, zum Dispergieren von schwer- und unlöslichen Farbmitteln und die Verwendung der Pigment- und Farbmitteldispersionen zum Ein- und Durchfärben von Leder nach dem Ausziehverfahren (Badverfahren) oder nach den Aufziehverfahren (Foulard-, Tauch-, Spritz-, Plüsch-, Bürst-, Gieß- und Walzenauftragverfahren) bzw. Kombinationen dieser Verfahren sowie die Verwendung als Gerbhilfsmittel werden in den folgenden Beispielen erläutert, ohne auf diese beschränkt zu sein.

Vergleichsbeispiel 1

11 Teile Dinitroanilin wurden in üblicher Weise in einer Mischung aus Schwefelsäure und Salzsäure mit 10,4 Teilen 40 %iger wäßriger Natriumnitritlösung diazotiert.

Aus einer Lösung von 8,64 Teilen β-Naphthol in einer Mischung von 100 Teilen Wasser und 8 Teilen 33 %iger Natronlauge wurde reines β-Naphthol gefällt, indem man die Lösung zu einer Mischung von 300 Teilen Wasser und 10 Teilen 31 %iger Salzsäure tropfte.

Die Kupplung zum C.I. Pigment Orange 5 (C.I. No. 12075) erfolgte sodann in üblicher Weise durch Zulauf der geklärten Diazoniumsalzlösung zur Suspension des gefällten β-Naphthols. Anschließend wurde das Pigment filtriert, mit Wasser gewaschen und schließlich getrocknet.

Anwendungsbeispiel 1a

Man kuppelte C.I. Pigment Orange 5, wie in Vergleichsbeispiel 1 beschrieben, wobei man aber vor dem Eintropfen der β-Naphthol-Lösung noch 1 Teil der erfindungsgemäßen Verbindung aus Beispiel 3.6. zur vorgelegten Mischung aus 300 Teilen Wasser und 10 Teilen 31 %iger Salzsäure gab.

Das so erhaltene Pigment unterscheidet sich von dem nach Vergleichsbeispiel 1 hergestellten durch eine deutlich gelbere Nuance und eine wesentlich höhere Farbstärke sowohl im Buch- und Offsetdruck als auch in wäßrigen Präparationen für Flexodruck oder Dispersionsfarben. Die Druckfarben und Präparationen zeichnen sich durch niedrige Viskosität aus. Außerdem zeigt das so erhaltene Pigment im Buch- und Offsetdruck stärkeren Glanz und bessere Transparenz.

Ähnlich gute Ergebnisse erhielt man bei Einsatz der erfindungsgemäßen Verbindungen aus den Beispielen 3.1., 3.2. und 3.11.

Vergleichsbeispiel 2

34,5 Teile 4-Chlor-2-nitroanilin wurden in verdünnter Salzsäure angerührt, dann mit 34,7 Teilen 40 %iger Natriumnitritlösung in üblicher Weise diazotiert und anschließend geklärt.

In ein Gemisch aus 800 Teilen Wasser, 4 Teilen Eisessig und 8,1 Teilen 33 %iger Natronlauge wurden 43,25 Teile Acetessigsäure-2-chloranilid eingerührt. Die Kupplung zum C.I. Pigment Yellow 3 (C.I. Nr. 11710) erfolgte bei 10 bis 20 °C derart, daß die Diazoniumsalzlösung unter die Oberfläche der Kupplungssuspension zulief. Der pH-Wert wurde dabei durch Zugabe von verdünnter Natronlauge bei 4 bis 4,5 gehalten. Anschließend wurde das Pigment filtriert, mit Wasser gewaschen und schließlich getrocknet.

Anwendungsbeispiel 2a

Man kuppelte C.I. Pigment Yellow 3 wie unter Vergleichsbeispiel 2 beschrieben, wobei aber zur Suspension des Acetessigsäure-2-chloranilids 4 Teile der erfindungsgemäßen Verbindung aus Beispiel 3.11 zugesetzt wurden.

Das so erhaltene Pigment zeigte in einem langöligen Alkydharzlack wesentlich höhere Farbstärke, hohe Transparenz und einen grüneren und reineren Farbton als das nach Vergleichsbeispiel 2 hergestellte C.I. Pigment Yellow 3.

Ähnlich gute Ergebnisse erhielt man bei der Verwendung der erfindungsgemäßen Verbindungen aus den Beispielen 3.16 und 3.17.

Vergleichsbeispiel 3

30,4 Teile 3-Nitro-4-aminotoluol wurden in verdünnter Salzsäure mit 35 Teilen 40 %iger Natriumnitritlösung in üblicher Weise diazotiert und anschließend geklärt.

In eine Mischung aus 600 Teilen Wasser, 4 Teilen Eisessig und 8,1 Teilen 33 %iger Natronlauge wurden 36 Teile Acetessigsäureanilid eingerührt.

Die Kupplung zum C.I. Pigment Yellow 1 (C.I. Nr. 11680) erfolgte bei 10 bis 20 °C derart, daß die Diazoniumsalzlösung unter die Oberfläche der Kupplungssuspension zulief. Der pH-Wert wurde dabei durch Zugabe von verdünnter Natronlauge bei 4,5 gehalten. Anschließend wurde das Pigment filtriert, mit Wasser gewaschen und schließlich getrocknet.

Anwendungsbeispiel 3a

Man kuppelte C.I. Pigment Yellow 1 wie in Vergleichsbeispiel 3 beschrieben, versetzte aber die Suspension des Acetessigsäureanilids vor Beginn der Kupplung mit 3,5 Teilen der erfindungsgemäßen Verbindung aus Beispiel 3.12.

Das so erhaltene Pigment zeigt in einem langöligen Alkydharzlack deutlich höhere Transparenz als das nach Vergleichsbeispiel 3 hergestellte C.I. Pigment Yellow 1.

Gleich gute Ergebnisse erhält man bei der Verwendung der erfindungsgemäßen Verbindungen aus den Beispielen 3.4. und 3.11.

Anwendungsbeispiel 4

138 Teile C.I. Pigment Red 112 (C.I. Nr. 12370) wurden mit 127 Teilen einer 35 %igen wäßrigen Lösung nach Beispiel 3.4. und 134 Teilen Wasser in einer Rührwerkskugelmühle mit Siliquarzit-Perlen (1 mm Durchmesser) gemahlen und anschließend durch Zugabe von 129 Teilen Wasser verdünnt. Die auf diese Weise erhaltene sehr gut fließfähige Pigmentdispersion eignet sich hervorragend zum Ein- und Durchfärben von Leder, für die Einstellung von Tief- und Flexodruckfarben sowie für die Papiermassefärbung.

Anwendungsbeispiel 5

138 Teile C.I. Pigment Brown 1 (C.I. Nr. 12480) wurden mit 44 Teilen der erfindungsgemäßen Verbindung aus Beispiel 3.3. und 217 Teilen Wasser in einer Rührwerkskugelmühle mit Siliquarzit-Perlen (1 mm Durchmesser) gemahlen und anschließend durch Zugabe von 129 Teilen Wasser verdünnt. Die gut fließfähige und lagerstabile Pigmentdispersion eignet sich besonders zum Ein- und Durchfärben von Leder.

Anwendungsbeispiel 6

138 Teile C.I. Pigment Yellow 83 (C.I. Nr. 21108) wurden entsprechend Anwendungsbeispiel 4 mit 127 Teilen einer 35 %igen wäßrigen Lösung nach Beispiel 3.4. mit 134 Teilen Wasser in einer Rührwerkskugelmühle mit Siliquarzit-Perlen (1 mm Durchmesser) gemahlen und aufgearbeitet. Die erhaltene Pigmentdispersion kann sehr gut zum Ein- und Durchfärben von Leder eingesetzt werden.

Anwendungsbeispiel 7

99 Teile C.I. Sulfur Brown 16 (C.I. Nr. 53285) wurden mit 229 Teilen einer 35 %igen wäßrigen Lösung nach Beispiel 3.4. in einer Rührwerkskugelmühle gemahlen und anschließend durch Zugabe von 58 Teilen Wasser verdünnt. Die erhaltene Pigmentdispersion eignet sich besonders für das Einfärben von Leder nach dem Ausziehverfahren sowie gleichermaßen für die Aufziehfärbung.

Anwendungsbeispiel 8

100 Teile C.I. Sulfur Brown 51 (C.I. Nr. 53327) wurden mit 229 Teilen einer 35 %igen wäßrigen Lösung nach Beispiel 3.4. entsprechend Anwendungsbeispiel 6 gemahlen und mit 71 Teilen Wasser verdünnt. Die erhaltene Pigmentdispersion eignet sich vorzugsweise zum Ein- und Durchfärben von Leder nach den Auf- und Ausziehverfahren.

Anwendungsbeispiel 9

50 Teile C.I. Disperse Orange 13 (C.I. Nr. 26080) wurden mit 30 Teilen des erfindungsgemäßen Aminsalzes (100 %) nach Beispiel 3.4 und 110 Teilen Wasser in einer Rührwerksmühle 4 Stunden bis zur Feinverteilung gemahlen. Nach Zugabe von 50 Teilen Wasser erhielt man einen 20 %igen Farbteig mit sehr guter Feinverteilung, der allen coloristischen Anforderungen, besonders beim Färben von Polyester-, Polyester/Wolle- und Polyester/Zellwolle-Mischgespinsten genügt.

Anwendungsbeispiel 10

50 Teile C.I. Disperse Red 65 (C.I. Nr. 11228) wurden in einer Rührwerkskugelmühle mit 20,6 Teilen der erfindungsgemäßen Verbindung (100 %) nach Beispiel 3.6, 36,4 Teilen Glykol und 73,1 Teilen Wasser feinverteilt und durch Zugabe von Wasser auf einen Gehalt von 35 % Farbstoff eingestellt. Der erhaltene Farbteig besitzt eine gute Fließfähigkeit und entspricht den Anforderungen für den Transferdruck.

Anwendungsbeispiel 11

75 Teile C.I. Carbon Black 7 wurden mit 69 Teilen einer 35 %igen wäßrigen Lösung nach Beispiel 3.4. und 60 Teilen Wasser entsprechend Anwendungsbeispiel 4 gemahlen und mit weiteren 13 Teilen Wasser verdünnt. Die erhaltene Rußdispersion besitzt ein gutes Fließverhalten und eignet sich hervorragend zum Ein- und Durchfärben von Leder nach dem Bad- und Tauchverfahren.

Anwendungsbeispiel 12

137 Teile Zirconiumcarbonat wurden mit 127 Teilen einer 35 %igen wäßrigen Lösung nach Beispiel 3.6. und 100 Teilen Wasser in einer Rührwerkskugelmühle mit Siliquarzit-Perlen (1 mm Durchmesser) gemahlen und mit weiteren 37 Teilen Wasser eingestellt. Die lagerstabile Zirconiumcarbonat-Dispersion eignet sich besonders zum Gerben von Leder.

Anwendungsbeispiel 13

50 Teile Titandioxid wurden mit 46 Teilen einer 35 %igen wäßrigen Lösung nach Beispiel 3.4. und 48,5 Teilen Wasser analog Anwendungsbeispiel 11 gemahlen und feinverteilt. Die erhaltene Titandioxid-Suspension ist sehr stabil und zum Färben nach sämtlichen Methoden von Leder sehr gut geeignet.

Anwendungsbeispiel 14

50 Teile des Pflanzenschutzmittels 2-Carbomethoxy-amino-benzimidazol wurden mit 68 Teilen einer 35 %igen wäßrigen Lösung nach Beispiel 3.2 und 82 Teilen Wasser bis zur Feinverteilung in einer 1-Liter-Rührwerksmühle gemahlen. Nach Abtrennung der Mahlkörper erhielt man eine sehr stabile Dispersion mit einer guten Schwebefähigkeit ohne Bodensatz.

In den folgenden Anwendungsbeispielen beziehen sich die Prozentangaben auf das Gewicht des Leders (100 %), und "min" bedeutet jeweils "Minuten". Die Echtheiten bedeuten Lichtechtheiten, die gemäß DIN 54004 in einer 6-stufigen Skala mit Noten von 1 bis 6 bewertet werden, wobei 6 die höchste Lichtechtheit ist, oder bedeuten die Naß- und Trockenreibechtheit, Migrationsechtheit, Waschechtheit, Schweißechtheit und Wasserechtheit.

Anwendungsbeispiel 15

Badpigmentierung von Möbelleder
Material: Zwischengetrocknetes Rindleder (crusted)

| Broschur: | | |
|---|---|---|
| 1000 %<br>2 %<br>0,5 % | Wasser, 50 °C<br>Ammoniak (25 %ig)<br>Nonylphenoloxethylat (15 Einheiten Ethylenoxid) | 2 Stunden |

| Spülen: | |
|---|---|
| Wasser 20 °C | 10 min |

| Vorfixieren: | | |
|---|---|---|
| 500 %<br>2 % | Wasser<br>Sulfoniertes Melamin-Formaldehyd-Kondensationsprodukt (Molverhältnis 1:4) | 10 min |

| Pigmentieren: | Mit einer Pigmentmischung aus | | |
|---|---|---|---|
| + | 1,34 %<br>1,43 %<br>0,08 %<br>4 %<br>0,15 %<br>2 % | Pigmentdispersion nach Anwendungsbeispiel 4<br>Pigmentdispersion nach Anwendungsbeispiel 6<br>Pigmentdispersion nach Anwendungsbeispiel 13<br>Ammoniak (25 %ig in Wasser)<br>Nonylphenoloxethylat (15 Einheiten Ethylenoxid)<br>Kondensationsprodukt aus Eiweißhydrolysat und Fettsäure | 40 min |

| Fetten: | | | |
|---|---|---|---|
| + | 5 % | Lederfettungsmittel, anionisch mit 70 % Aktivsubstanz | 40 min |

| Absäuern: | | | |
|---|---|---|---|
| + | 500 %<br>5 % | Wasser, 60 °C (Badtemperatur 40 °C)<br>Ameisensäure (85 %ig in Wasser) | 20 min |

| Nachfixieren: | | | |
|---|---|---|---|
| + | 1 % | Formaldehyd-Dicyandiamid-Kondensationsprodukt (Molverhältnis 3:1) | 20 min |

Die fertiggestellten Leder sind sehr gut ein- und durchgefärbt und besitzen alle geforderten Echtheiten (bis 5) bei guter Abdeckung kleiner Fehler.

Anwendungsbeispiel 16

Badpigmentierung von Schuhoberleder
Material: Chromfeuchtes, gefalztes Rindleder (wetblue).

| Waschen: | | |
|---|---|---|
| Wasser, 35 °C<br>Essigsäure, 60 %ig | 300 %<br>0,2 % | 10 min |
| ablassen, kalt spülen | | |

| Neutralisieren: | | |
|---|---|---|
| WAsser, 35 °C<br>Na-formiat<br>Na-bicarbonat | 150 %<br>1,2 %<br>0,7 % | 60 min |
| kurz spülen | | |

| Durchfärbung: | | |
|---|---|---|
| Wasser, 40 °C | 150 % | |
| Ammoniak, 25 %ig | 1 % | |
| Pigmentdispersion nach Anwendungsbeispiel 11 (wasserlöslicher Farbstoff) | 2,5 % | |
| ®Granofin V 3991 | 1 % | 60 min |
| Ameisensäure, 85 %ig | 1,5 % | 10 min |
| Ameisensäure, 85 %ig | 2,5 % | 20 min |
| ablassen | | |

| Nachgerbung: | | |
|---|---|---|
| Wasser, 40 °C | 150 % | |
| ®Coralon GP | 2 % | |
| Mimosa | 8 % | 30 min |
| Wasser, 60 °C | 100 % | 30 min |
| ablassen, kurz spülen | | |

| Nachfärbung: | | |
|---|---|---|
| Wasser, 60 °C | 200 % | |
| ®Derminol-Licker K | 1 % | 15 min |
| Pigmentdispersion nach Anwendungsbeispiel 11 | 0,5 % | |
| ®Granofin V 3991 | 0,5 % | 30 min |
| Ameisensäure, 85 %ig | 1,5 % | 15 min |
| Ameisensäure, 85 %ig | 1,5 % | 15 min |
| ablassen | | |

| Fetten: | | |
|---|---|---|
| Wasser, 50 °C | 200 % | |
| Lederfettungsmittel | 6 % | 40 min |
| Ameisensäure, 85 %ig | 2 % | 30 min |
| kalt spülen, aufbocken | | |

Die fertiggestellten Leder sind sehr gut eingefärbt mit ausgezeichneten Echtheiten und vorzüglicher Abdeckung.

Anwendungsbeispiel 17

Badpigmentierung von Schuhoberleder
Material: Chromfeuchtes, gefalztes Rindleder (wetblue).

| Spülen: | |
|---|---|
| Wasser, 35 °C | 10 min |

| Neutralisieren: | | |
|---|---|---|
| 150 %<br>1 %<br>0,5 % | Wasser, 35 ° C<br>Na-acetat<br>Na-bicarbonat | 40 min |

| Spülen: | |
|---|---|
| Wasser, 20 ° C | 10 min |

| Vorfixieren: | | |
|---|---|---|
| 100 %<br>2 %<br>2 % | Wasser, 20 ° C<br>Ammoniak (25 %ig in Wasser)<br>Sulfoniertes Melamin-Formaldehyd-Kondensationsprodukt (Molverhältnis 1:3) | 10 min |

| Badpigmentierung: | | | |
|---|---|---|---|
| + | 4 %<br>2 % | Pigmentdispersion nach Anwendungsbeispiel 8<br>Formaldehyd-Harnstoff-Kondensationsprodukt (Molverhältnis 1:1) | 40 min |

| Nachgerben: | | | |
|---|---|---|---|
| + | 4 % | Vegetabilischer Gerbstoff | 40 min |

| Fetten: | | | |
|---|---|---|---|
| + | 8 % | Lederfettungsmittel, anionisch mit 70 % Aktivsubstanz | 40 min |

| Absäuern: | | | |
|---|---|---|---|
| + | 100 %<br>4 % | Wasser, 60 ° C (Badtemp. 40 ° C)<br>Ameisensäure (85 %ig in Wasser) | 20 min |

| Nachfixieren: | | | |
|---|---|---|---|
| + | 1 % | Formaldehyd-Melamin-Kondensationsprodukt (Molverhältnis 2,5:1) | 10 min |

Das fertiggestellte Leder ist sehr gut eingefärbt und besitzt sehr gute Echtheiten (bis 5) und eine gute Abdeckung.

Anwendungsbeispiel 18

Braunpigmentierung auf Schleifbox, trocken, nach dem Plüsch-Färbe-Verfahren:
897 Teile entmineralisiertes Wasser
43 Teile (20 Teile Pigment) Pigmentdispersion nach Anwendungsbeispiel 5
30 Teile Methoxy-butanol

Das fertiggestellte Leder besitzt bei sehr guter Einfärbung hervorragende Eigenschaften mit einer guten Abdeckung.

Anwendungsbeispiel 19

Schwarzpigmentierung auf vollnarbigem Rindleder, crusted, nach dem Foulard-Färbeverfahren:
893 Teile entmineralisiertes Wasser
77 Teile (30 g Pigment) Pigmentdispersion nach Anwendungsbeispiel 11
30 Teile Butyldiglykol
Nach einer Tauchverweilzeit von 10 Sekunden und anschließender Fertigstellung der Leder erhielt man totale Durchfärbungen und sehr gute Echtheiten (bis zu 5) und Abdeckung kleiner Narbenfehler.

Anwendungsbeispiel 20

Braunpigmentierung von vollnarbigem Rindleder, gepaste Leder, etwas feucht (Feuchtigkeitsgrad etwa 20 %) durch Ausbürsten mit Wasser, nach dem Foulard-Färbeverfahren:
848 Teile entmineralisiertes Wasser
20 Teile C.I. Soluble Sulfur Brown 51
72 Teile (26 Teile Pigment) Pigmentdispersion nach Anwendungsbeispiel 8
30 Teile Butyldiglykol
Nach einer Tauchverweilzeit bis zu 10 Sekunden und Abwelken bei 25 bar erhielt man nach Fertigstellung sehr gut durchgefärbte Leder mit einwandfreier Abdeckung kleiner Fehler und hohen Echtheiten.

Anwendungsbeispiel 21

Braunpigmentierung von Ziegenleder, vollnarbig, crusted, nach dem Gieß- oder Airlesspritzverfahren:
690 Teile entmineralisiertes Wasser
150 Teile Pigmentmischung aus
59,5 Teilen gemäß Anwendungsbeispiel 4
75,0 Teilen gemäß Anwendungsbeispiel 6
27,1 Teilen gemäß Anwendungsbeispiel 7
140 Teile Polyacrylsäure, Molgewicht ca. 10000 g/mol
20 Teile Butyldiglykol
Nach ca. 10 Sekunden Kontaktzeit (Einziehzeit) und anschließender Trocknung wurde mit Abschlußlack gespritzt. Die so fertiggestellten Leder sind sehr gut eingefärbt, besitzen höchste Echtheiten (bis 5) bei sehr guter Abdeckung kleiner Fehler. Ebenso gute Ergebnisse erhielt man mit einer Pigmentmischung aus
67,5 Teilen gemäß Anwendungsbeispiel 4
64,3 Teilen gemäß Anwendungsbeispiel 6 und
9,0 Teilen gemäß Anwendungsbeispiel 8.

Anwendungsbeispiel 22

Material Rindsblöße, entkalkt, gebeizt, pH 7,5

Spülen: Wasser, 35°C 10 min

Gerbung: $MgCO_3$ dispergiert mit dem Produkt gemäß Herstellungsbeispiel 3.18.

| | | | |
|---|---|---|---|
| | Wasser, 30°C | 80 % | |
| | $MgCO_3$-Dispersion | 10 % | 2 Stunden, pH 7, mit Wasser auf 1:10 verdünnt |
| + | $H_3PO_4$ | 2 % | 1 Stunde, pH 6 |
| + | Harnstoff-Formaldehyd-Mischkondensat, beispielsweise ®Granofin PL | 5 % | 1 Stunde, pH 6 |
| + | $H_3PO_4$ | 2 % | mit Wasser auf 1:10 verdünnt 1/2 Stunde, pH 5,5 |
| + | $H_3PO_4$ | 2 % | mit Wasser auf 1:10 verdünnt 1/2 Stunde, pH 5 |
| + | Melamin-Formaldehyd-Harnstoff-Kondensationsprodukt, beispielsweise ®Madurit MW 350 (Kationisch) | 10 % | |
| + | $H_3PO_4$ | 2 % | 1/2 Stunde, pH 5, mit Wasser auf 1:10 verdünnt, 1 Stunde, pH 5,5 |
| + | Melamin-Formaldehyd-Harnstoff-Kondensationsprodukt, beispielsweise ®Madurit MW 700 (Anionisch) | 2 % | 4 Stunden |

Schrumpftemperatur: 90 bis 92°C

3 Tage aufbocken, abwelken, spalten auf 2,5 mm Stärke, falzen auf 2 mm Stärke und betriebsüblich weiterverarbeiten, wie z.B. in Anwendungsbeispiel 23.

Die erfindungsgemäße Gerbmitteldispersion erwies sich als sehr gut geeignet für weiße bzw. helle Lederfarbtöne.

Anwendungsbeispiel 23

| | | | |
|---|---|---|---|
| Material | Rindsblöße, gespalten auf 4 mm Stärke, entkalkt, gebeizt, pH 7,5 | | |
| Spülen: | Wasser, 30°C | | 10 min |
| Vorgerben: | Wasser, 30°C | 60 % | |
| | Harnstoff-Formaldehyd-Mischkondensat, beispielsweise ®Granofin WG | 10 % | 60 min |
| Gerben: | $Zr(OH)_2CO_3$, dispergiert mit dem Produkt nach Anwendungsbeispiel 12. | 36 % | nach 4 Stunden, pH 4,5 |
| Schrumpftemperatur: 72°C | | | |
| Aufbocken: | 48 h, Falzen auf 2 mm Stärke | | |
| Spülen: | Wasser, 40°C | | 10 min |
| Neutralisieren: | Wasser, 40°C | 150 % | |
| | Na-acetat | 3 % | 40 min |
| Spülen: | Wasser, 40°C | | 10 min |

| | | | |
|---|---|---|---|
| Nachgerben | Wasser, 40 °C | 50 % | |
| | Polyaldehyd mit maskierten Aldehydgruppen, beispielsweise ®Granofin A hoch konz. | 4 % | 20 min |
| + | ®Granofin WG | 8 % | 40 min |
| + | Wasser, 50 °C | 100 % | |
| | Oxethylierter sulfonierter Fischtran, beispielsweise ®Derminollicker OS1 | 6 % | |
| | Chlorparaffinsulfonat mit anionischen und nichtionogenen Emulgatoren, beispielsweise ®Derminollicker M | 6 % | |
| | Chlorparaffinsulfonat, beispielsweise ®Derminolpelzlicker SL | 2 % | 40 min |
| + | HCOOH | 4 % | 20 min |
| + | Dicyandiamid-Formaldehyd-Kondensationsprodukt, beispielsweise ®Solidogen FRZ | 0,5 % | 10 min |

Schrumpftemperatur: 80° - 90 °C

**Patentansprüche**

1. Verbindung der allgemeinen Formel (I)

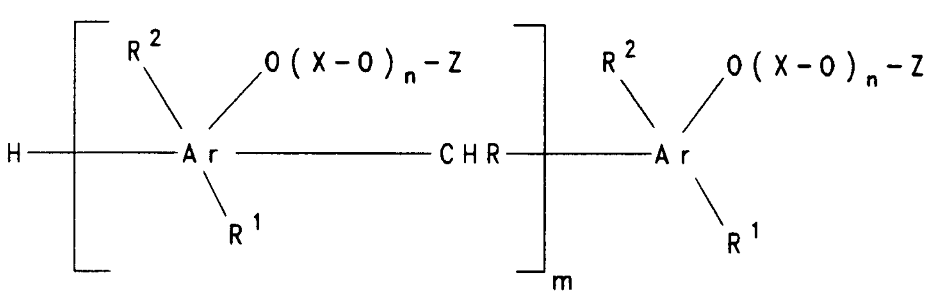

( I )

in welcher

Ar einen Benzol-, Naphthalin- oder Biphenyl-Rest darstellt,

X für gleiche oder verschiedene Gruppen der Formeln $-CH_2CH_2-$, $-CH(CH_3)CH_2-$ und $-CH_2CH-$

$(CH_3)$-, steht,

$R^1$ ein Rest aus der Gruppe $-CH(CH_3)-C_6H_5$, $-CH(CH_3)-C_6H_4CH_3$ und $-C(CH_3)_2-C_6H_5$ oder $-CH_2-CH(CH_3)-C_6H_5$ ist, oder wenn Ar für einen Benzolrest steht, ein Alkylrest mit 1 bis 14 C-Atomen ist oder die vorstehend genannten Bedeutungen hat,

$R^2$ eine der für $R^1$ genannten Bedeutungen hat oder Wasserstoff ist,

R ein Alkylrest mit 1 bis 9 C-Atomen oder Wasserstoff ist,

Z für gleiche oder verschiedene Reste $Z^1$ bis $Z^6$ steht, worin

$Z^1$ Wasserstoff,

$Z^2$ einen Acylrest der Formel $R^3$-CO-, in der $R^3$ ein geradkettiger, gesättigter oder ungesättigter $C_1$-$C_{21}$-Alkylrest, der noch durch ein oder zwei Hydroxygruppen substituiert sein kann,

$Z^3$ einen Acylrest einer Di- oder Tricarbonsäure auf Basis einer di- oder trimerisierten $C_{11}$-$C_{24}$-Fettsäure,

$Z^4$ einen Acylrest der Formel $R^4$-CO-, in der $R^4$ einen Phenyl- oder Naphthylrest bedeutet,

$Z^5$ einen Acylrest einer unmodifizierten oder modifizierten natürlichen Harzsäure,

$Z^6$ gleiche oder verschiedene Reste der Formeln $-CO-CH=CH-COOM$, $-CO-CH_2-CH_2-COOM$, $-CO-CH_2-CH(SO_3M)-COOM$, $-CO-CH(SO_3M)-CH_2-COOM$ und $-OC-C_6H_4-COOM$ bedeuten,

worin M für

Wasserstoff, ein Alkalimetall, ein Äquivalent eines Erdalkalimetalls oder eine Ammoniumgruppe steht, die durch ein bis vier $C_1$-$C_5$-Alkylreste oder $C_2$-$C_5$-Alkylolreste substituiert sein kann, oder eine aus Ammoniak oder aus $C_1$-$C_5$-Alkylaminen oder $C_2$-$C_5$-Alkylolaminen durch Anlagerung von 1 bis 150 Ethylenoxid- und/oder Propylenoxideinheiten erhaltene Ammoniumgruppe oder eine Gruppe der Formel (II)

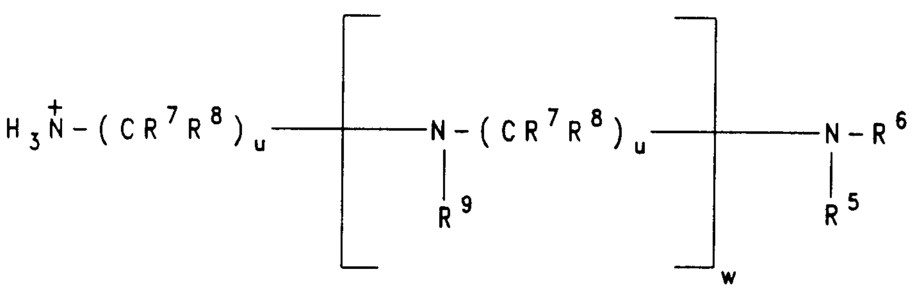

(II)

ist, worin $R^9$, $R^5$ und $R^6$ unabhängig voneinander für ein Wasserstoffatom oder ein Hydroxyalkyl mit 1 bis 6 C-Atomen ist, $R^7$ und $R^8$ unabhängig voneinander für Wasserstoff oder Methyl stehen, u gleich oder verschieden ist und eine ganze Zahl von 2 bis 14 bedeutet und w für eine ganze Zahl von Null bis 25 steht, oder worin M

für eine Gruppe der Formel (III) steht,

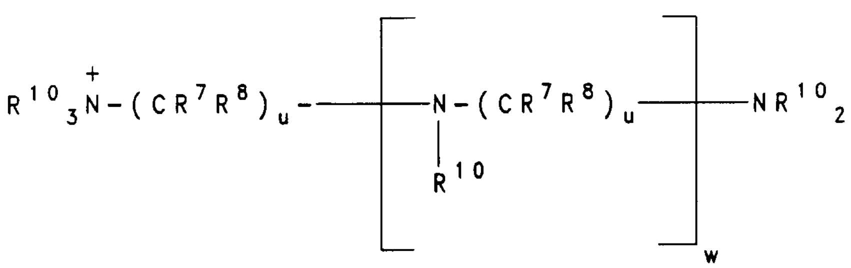

(III)

worin $R^{10}$ die Gruppe $H(O-X)_y$ bedeutet,

worin X die vorstehend genannten Bedeutungen hat und y eine ganze Zahl von 1 bis 100 ist,

n eine Zahl von 1 bis 150 und

m eine ganze Zahl von 1 bis 11 bedeuten.

**2.** Verbindung nach Anspruch 1, dadurch gekennzeichnet, daß
Ar ein Benzolrest,
$R^1$ ein Rest aus der Gruppe $-CH(CH_3)-C_6H_5$, $-CH(CH_3)-C_6H_4CH_3$, $-C(CH_3)_2-C_6H_5$ und $-CH_2-CH(CH_3)-C_6H_5$ und
$R^2$ Wasserstoff ist.

**3.** Verbindung nach Anspruch 1, dadurch gekennzeichnet, daß
Ar ein Naphthalin- oder Biphenylrest
$R^1$ ein Rest aus der Gruppe $-CH(CH_3)-C_6H_5$, $-CH(CH_3)-C_6H_4CH_3$, $-C(CH_3)_2-C_6H_5$ und $-CH_2-CH(CH_3)-C_6H_5$ und
$R^2$ Wasserstoff ist.

**4.** Verbindung nach mindestens einem der Ansprüche 1 bis 3, dadurch gekennzeichnet, daß R Wasserstoff ist.

**5.** Verbindung nach mindestens einem der Ansprüche 1 bis 4, dadurch gekennzeichnet, daß 10 bis 100 %, vorzugsweise 20 bis 80 %, insbesondere 30 bis 70 %, der Reste Z jeweils unabhängig voneinander die Bedeutung von $Z^2$, $Z^3$, $Z^4$, $Z^6$ oder einer Kombination davon haben und 0 bis 90 %, vorzugsweise 80 bis 20 %, insbesondere 30 bis 70 %, der Reste Z die Bedeutung von $Z^1$, $Z^5$ oder einer Kombination davon haben.

**6.** Verbindung nach mindestens einem der Ansprüche 1 bis 5, dadurch gekennzeichnet, daß 10 bis 100 %, vorzugsweise 20 bis 70 %, insbesondere 30 bis 50 %, der Reste Z die Bedeutung von $Z^6$ haben, wobei der Rest $-OC-C_6H_4-COOM$ entweder

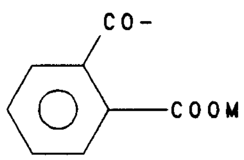
oder
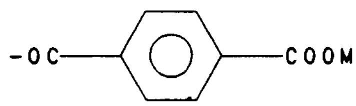

ist, und 0 bis 90 %, vorzugsweise 30 bis 80 %, insbesondere 50 bis 70 %, der Reste Z die Bedeutung von $Z^1$, $Z^2$, $Z^3$, $Z^4$, $Z^5$ oder einer Kombination davon haben.

**7.** Verbindung nach mindestens einem der Ansprüche 1 bis 6, dadurch gekennzeichnet, daß
$Z^6$ gleiche oder verschiedene Reste der Formeln
$-CO-CH=CH-COOM$, $-CO-CH_2-CH_2-COOM$, $-CO-CH_2-CH(SO_3M)-COOM$, $-CO-CH(SO_3M)-CH_2-COOM$ und $-OC-C_6H_4-COOM$,
worin M für
Wasserstoff oder eine Ammoniumgruppe, die durch ein bis vier $C_1$-$C_5$-Alkylreste oder $C_2$-$C_5$-Alkylolreste substituiert sein kann, oder eine aus Ammoniak oder aus $C_1$-$C_5$-Alkylaminen oder $C_2$-$C_5$-Alkylolaminen durch Anlagerung von 5 bis 30 Ethylenoxid- und/oder Propylenoxideinheiten erhaltene Ammoniumgruppe oder für eine Gruppe der Formel (II)

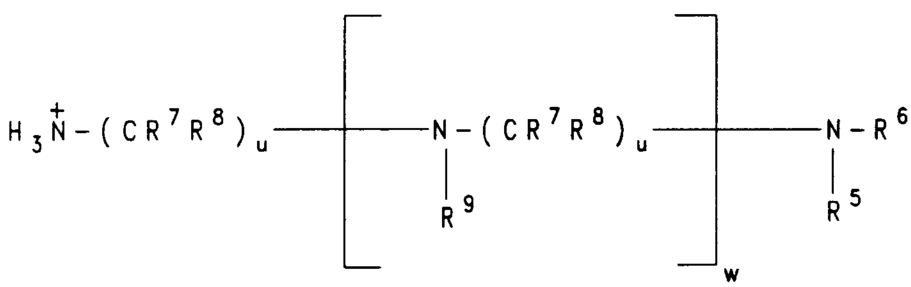
(II)

worin $R^9$, $R^5$ und $R^6$ unabhängig voneinander für ein Wasserstoffatom oder ein Hydroxyalkyl mit 2 bis 3 C-Atomen, $R^7$ und $R^8$ unabhängig voneinander für Wasserstoff oder Methyl, u

gleich oder verschieden ist und für eine ganze Zahl von 2 bis 3 und w für eine ganze Zahl von Null bis 5 stehen, oder worin M für eine Gruppe der Formel (III) steht,

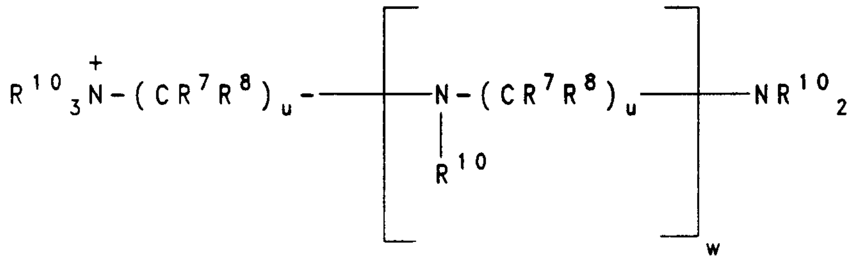

(III)

worin $R^{10}$ die Gruppe $H(O\text{-}X)_y$ bedeutet,
worin X die vorstehend genannten Bedeutungen hat und y eine ganze Zahl von 1 bis 30 ist.

8. Verbindung nach mindestens einem der Ansprüche 1 bis 7, dadurch gekennzeichnet, daß
   X $-CH_2\text{-}CH_2-$
   $R^1$ den Rest $-CH(CH_3)\text{-}C_6H_5$,
   $R^2$ Wasserstoff oder Methyl,
   R Wasserstoff,
   Z gleiche oder verschiedene Reste der Formeln $Z^2$, $Z^5$ und $Z^6$,
   n eine Zahl von 5 bis 30 und
   m eine ganze Zahl von 1 bis 6 bedeuten.

9. Verbindung nach mindestens einem der Ansprüche 1 bis 2 und 4 bis 8, dadurch gekennzeichnet, daß
   Ar einen Benzolrest,
   X $-CH_2\text{-}CH_2-$,
   $R^1$ den Rest $-CH(CH_3)\text{-}C_6H_5$,
   $R^2$ Wasserstoff oder Methyl,
   R Wasserstoff und
   Z gleiche oder verschiedene Reste der Formel $Z^6$ mit den vorstehend genannten Bedeutungen, wobei M für ein Alkalimetall oder eine Ammonium-Gruppe, die durch eine $C_1\text{-}C_4$-Alkylgruppe substituiert sein kann, oder für eine Gruppe der Formel (II) steht,
   n eine Zahl von 5 bis 30 und
   m eine ganze Zahl von 1 bis 6 bedeuten.

10. Verbindung nach Anspruch 1, dadurch gekennzeichnet, daß
   Ar ein Benzolrest,
   $R^1$ ein Alkylrest mit 1 bis 14, vorzugsweise 8 bis 12, C-Atomen und
   $R^2$ Wasserstoff oder Methyl ist.

11. Verbindung nach Anspruch 10, dadurch gekennzeichnet, daß 10 bis 100 %, vorzugsweise 50 bis 100 %, der Reste Z aus Acylresten der Formeln

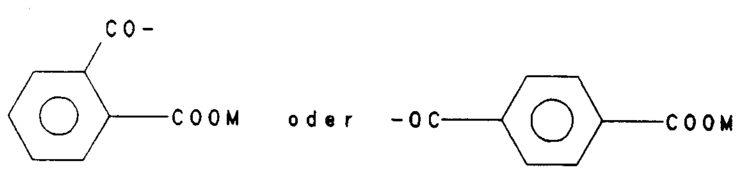

bestehen und 0 bis 90 %, vorzugsweise 0 bis 50 %, der Reste Z aus Acylresten der Formeln $-OC\text{-}CH=CH\text{-}COOM$, $-OC\text{-}CH_2\text{-}CH_2\text{-}COOM$, $-OC\text{-}CH_2\text{-}CH(SO_3M)\text{-}COOM$, $-OC\text{-}CH(SO_3M)\text{-}CH_2\text{-}COOM$ oder einer Kombination davon bestehen.

**12.** Verbindung nach Anspruch 1, dadurch gekennzeichnet, daß
Ar ein Benzol- oder Naphthalinrest,
$R^1$ ein Rest aus der Gruppe $-CH(CH_3)-C_6H_5$, $-CH(CH_3)-C_6H_4CH_3$, $-C(CH_3)_2-C_6H_5$ und $-CH_2-CH(CH_3)-C_6H_5$ und
$R^2$ Wasserstoff oder Methyl und
10 bis 50 %, vorzugsweise 30 bis 50 %, der Reste Z die Bedeutung von $Z^5$ und 50 bis 90 %, vorzugsweise 50 bis 70 %, der Reste Z die Bedeutung von $Z^6$ haben.

**13.** Verbindung nach mindestens einem der Ansprüche 1 bis 12, dadurch gekennzeichnet, daß M für eine Gruppe der Formel (II) steht,

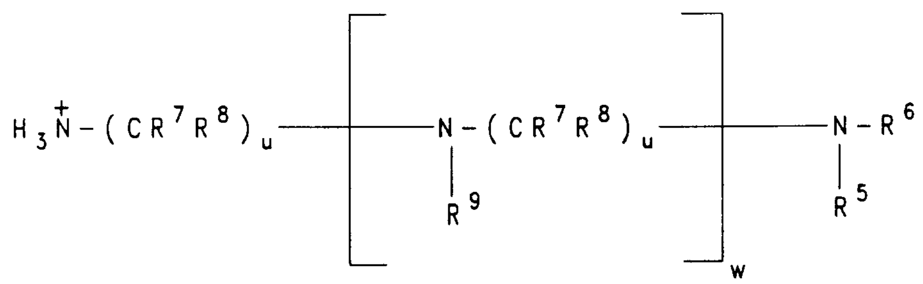

(II)

worin $R^9$, $R^5$ und $R^6$ unabhängig voneinander für ein Wasserstoffatom oder ein Hydroxyalkyl mit 2 bis 3 C-Atomen, $R^7$ und $R^8$ unabhängig voneinander für Wasserstoff oder Methyl, u gleich oder verschieden ist und für eine ganze Zahl von 2 bis 3 und w für eine ganze Zahl von Null bis 5 stehen.

**14.** Verfahren zur Herstellung einer Verbindung nach Anspruch 1, dadurch gekennzeichnet, daß man
a) Phenol, $C_1$-$C_{14}$-Alkylphenol oder o- bzw. p-Phenylphenol in Gegenwart eines sauren Katalysators mit einem $C_1$-$C_{10}$-Alkanal zu Novolakharzen kondensiert und anschließend gegebenenfalls mit Vinylbenzol, Isopropenylbenzol oder Vinyltoluol alkyliert, oder
b) $\alpha$- oder $\beta$-Naphthol in Gegenwart eines sauren Katalysators mit Vinylbenzol, Isopropenylbenzol oder Vinyltoluol alkyliert und anschließend gleichermaßen wie die in a) genannten Phenole mit einem $C_1$-$C_{10}$-Alkanal zu Novolakharzen umsetzt und
c) die nach a) oder b) erhaltenen Novolakverbindungen mit 1 bis 150 Mol, vorzugsweise 5 bis 30 Mol, bezogen auf jede freie Hydroxygruppe, Ethylenoxid oder Propylenoxid oder mit beiden Epoxiden hintereinander oder einem Gemisch beider Epoxide oxalkyliert und
d) gegebenenfalls die endständigen Hydroxygruppen mit den den Resten $Z^2$, $Z^3$, $Z^4$, $Z^5$ und $Z^6$ zugrundeliegenden Carbonsäuren oder reaktiven Derivaten dieser Säuren, vorzugsweise Anhydriden, durchgehend verestert oder teilverestert oder mit mehreren der vorstehend genannten Carbonsäuren oder deren Derivaten mischverestert, vorhandene Maleinsäurehalbestergruppen gegebenenfalls mit einem Sulfit umsetzt und
e) gegebenenfalls die freien Carboxylgruppen mit einem Alkalihydroxid, Erdalkalihydroxid oder einem dem Rest M zugrundeliegenden Amin neutralisiert.

**15.** Verfahren nach Anspruch 14, dadurch gekennzeichnet, daß in den Verfahrensstufen a) und b) das Molverhältnis zwischen dem dem Rest Ar zugrundeliegenden Aromat und dem eingesetzten Alkanal 3:2 bis 17:16 beträgt.

**16.** Verfahren nach Anspruch 14, dadurch gekennzeichnet, daß in der Verfahrensstufe d) als reaktives Carbonsäurederivat das Anhydrid, vorzugsweise Maleinsäureanhydrid, oder ein Ester der entsprechenden Carbonsäure eingesetzt wird.

**17.** Verfahren nach Anspruch 16, dadurch gekennzeichnet, daß durch die Veresterung entstandene Maleinsäurehalbestergruppen mit einem Sulfit, vorzugsweise Natriumsulfit oder Natriumhydrogensulfit, umgesetzt werden.

**18.** Verfahren nach Anspruch 14 zur Herstellung eines Mischesters, dadurch gekennzeichnet, daß das in Verfahrensstufe c) erhaltene Novolak-oxalkylat zunächst mit einer oder mehreren den Resten $Z^2$, $Z^4$

und $Z^5$ zugrundeliegenden Carbonsäuren oder einem ihrer Derivate teilverestert wird und anschließend die noch freien endständigen Hydroxygruppen mit einer dem Rest $Z^6$ zugrundeliegenden Dicarbonsäure oder einem ihrer Derivate umgesetzt werden.

**19.** Verwendung einer Verbindung nach mindestens einem der Ansprüche 1 bis 13 als oberflächenaktives Mittel.

**20.** Verwendung nach Anspruch 19 als Kupplungshilfs- und Präparationsmittel bei der Herstellung von Azofarbmitteln, vorzugsweise von Azopigmenten.

**21.** Verwendung nach Anspruch 19 als Dispergiermittel für die Herstellung von Feststoffdispersionen, vorzugsweise anorganischen und organischen Pigmentdispersionen, für die Herstellung von Gerbmitteldispersionen auf Metallsalzbasis sowie für die Formulierung von Pflanzenschutzmitteln.

**22.** Verwendung nach mindestens einem der Ansprüche 19 bis 21 für die Herstellung von Druck- und Lackfarben, für die Papiermassefärbung, zum Ein- und Durchfärben von Leder nach dem Bad-, Foulard-, Spritz-, Plüsch-, Bürst-, Gieß- und Walzenauftragverfahren sowie zum Gerben von Leder.

**23.** Verwendung nach mindestens einem der Ansprüche 19 bis 21 als Färberei-, Netz- und Broschurhilfsmittel für Textilien und Leder.

Europäisches Patentamt

# EUROPÄISCHER RECHERCHENBERICHT

Nummer der Anmeldung
EP 92 12 1460

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| A | EP-A-0 305 885 (HOECHST)<br>--- | | C08G8/28<br>C09B41/00<br>C09B67/00<br>D06P1/52<br>D06P1/651<br>D06P1/613 |
| A | EP-A-0 078 975 (HOECHST)<br>--- | | |
| A | EP-A-0 065 751 (HOECHST)<br>--- | | |
| A | EP-A-0 058 384 (HOECHST)<br>--- | | |
| A | EP-A-0 033 592 (ICI)<br>--- | | |
| A | GB-A-2 113 257 (SANDOZ)<br>--- | | |
| A | DE-A-3 247 400 (SANDOZ)<br>--- | | |
| A | GB-A-2 117 781 (MAGNA CORP.)<br>--- | | |
| A | GB-A-2 118 937 (CIBA-GEIGY)<br>--- | | |
| A | FR-A-2 123 537 (BAYER)<br>--- | | |
| A | EP-A-0 350 803 (HOECHST)<br>--- | | RECHERCHIERTE SACHGEBIETE (Int. Cl.5) |
| A | FR-A-2 389 669 (BASF)<br>--- | | C08G<br>C09B<br>D06P |
| A | US-A-4 087 480 (AKIO TAKHASHI ET AL.)<br>----- | | |

Der vorliegende Recherchenbericht wurde für alle Patentansprüche erstellt

| Recherchenort | Abschlußdatum der Recherche | Prüfer |
| --- | --- | --- |
| DEN HAAG | 10 MAI 1993 | STIENON P.M.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)